(19) Europäisches Patentamt
European Patent Office
Office européen des brevets

(11) EP 4 056 622 B1

(12) **EUROPEAN PATENT SPECIFICATION**

(45) Date of publication and mention of the grant of the patent:
**02.08.2023 Bulletin 2023/31**

(21) Application number: **22160374.9**

(22) Date of filing: **07.03.2022**

(51) International Patent Classification (IPC):
***C08G 63/64*** *(2006.01)* ***C08G 18/44*** *(2006.01)*

(52) Cooperative Patent Classification (CPC):
(C-Sets available)
**C08G 18/246; C08G 18/0852; C08G 18/3206; C08G 18/3234; C08G 18/44; C08G 18/7671; C08G 63/64; C09J 175/06; D06N 3/14** (Cont.)

# (54) POLYESTER POLYCARBONATE POLYOL AND SYNTHETIC LEATHER

POLYESTER-POLYCARBONATPOLYOL UND KUNSTLEDER

POLYESTER POLYCARBONATE POLYOL ET CUIR SYNTHÉTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.03.2021 JP 2021036623**

(43) Date of publication of application:
**14.09.2022 Bulletin 2022/37**

(73) Proprietor: **Asahi Kasei Kabushiki Kaisha**
**Tokyo 1000006 (JP)**

(72) Inventors:
- **Masubuchi, Tetsuo**
**Tokyo, 1000006 (JP)**
- **Hoshino, Eriko**
**Tokyo, 1000006 (JP)**

(74) Representative: **Strehl Schübel-Hopf & Partner**
**Maximilianstrasse 54**
**80538 München (DE)**

(56) References cited:
**WO-A1-2004/101640**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08G 18/10, C08G 18/3206;**
**C08G 18/10, C08G 18/3234**

## Description

### Technical Field

The present invention relates to a novel polyester polycarbonate polyol, and synthetic leather using the same novel polyester polycarbonate polyol.

### Background Art

Synthetic leather favorable in flexibility has been conventionally obtained by coating a fibrous base material or a film-forming plate with a solution of a polyurethane resin obtained by polymerization with polyester polyol such as polypropylene glycol or polytetramethylene glycol, and coagulating the solution in water. Although having excellent flexibility, such synthetic leather is easily decomposed due to a component such as sweat and is problematic in terms of durability. There is also synthetic leather obtained by coagulating a solution of a polyurethane resin obtained by polymerization with polyester polyol obtained by reacting a hydroxy compound and a dibasic acid. This synthetic leather is problematic in terms of hydrolysis resistance.

For example, Japanese Patent No. 3142102 discloses synthetic leather obtained from a polyurethane resin obtained by polymerization with polycarbonate diol, as synthetic leather for solving the above problems. Japanese Patent No. 3142102 specifically discloses a porous sheet-shaped article obtained by allowing a urethane composition containing a polyurethane formed from a polycarbonate diol, an organic isocyanate and a low molecular diol, and a polyurethane formed from a polyester-based diol, an organic diisocyanate and a low molecular diol to be incorporated or connected into a fiber base material and/or onto a fiber base material.

Japanese Patent Laid-Open No. 2003-119314 discloses a porous sheet material obtained by a wet film-forming method involving providing a solution of a polyurethane resin formed from a high molecular diol, an organic isocyanate and, if necessary, a chain elongating agent, to a substrate. The porous sheet material is characterized in that the high molecular diol is a mixed diol of a polycarbonate diol and a polyester diol, the polycarbonate diol is a copolymerized polycarbonate diol which contains 1,4-butanediol and one or more of other alkane diols each having 4 to 6 carbon atoms, which contains 50 to 90% by mol of 1,4-butanediol based on the total molar number of the diol and which has a number average molecular weight of 500 to 5000, and the coagulation value of the polyurethane resin is 7 to 14.

Japanese Patent Laid-Open No. 2004-346094 discloses a surface film layer of synthetic leather, obtained by using a polyurethane resin containing a polyester polycarbonate diol obtained by a transesterification reaction of an aliphatic oligocarbonate diol obtained by a transesterification reaction of an aliphatic diol and a dialkyl carbonate, and a polyester polyol obtained by ring-opening addition polymerization of a cyclic ester compound with a compound having an active hydrogen group as an initiator, and a polyisocyanate and a chain extender.

Japanese Patent No. 4177318 discloses a porous sheet material obtained by wet coagulation, characterized in that the porous sheet material is obtained by reacting a high molecular diol containing an polycarbonate diol (a1) formed from an alkane diol having 4 or more and 6 or less carbon atoms and a polycarbonate diol (a2) formed from an alkane diol having 7 or more and 12 or less carbon atoms, both the polycarbonate diols being copolymerized polycarbonate diols and the percentages by weight of (a1) based on the total weight of (a1) and (a2) being 10% or more and 80% or less, an organic isocyanate and a chain elongating agent.

Japanese Patent Laid-Open No. 2009-185260 discloses synthetic leather including a surface layer and a fiber cloth, in which the surface layer is formed from a surface layer material-forming composition for fiber laminates, the composition contains a main agent and a curing agent, the main agent is a polycarbonate diol obtained from 1,6-hexanediol and a low molecular carbonate, the curing agent contains a modified polyisocyanate (B1) of hexamethylene diisocyanate, having a number average molecular weight of 350 to 500 and an average number of functional groups (f) of $2 \leq f < 3$, and an isocyanurate-modified polyisocyanate (B2) of hexamethylene diisocyanate, having an average number of functional groups of $f \geq 3$, the (B1):(B2) equals to 50:50 to 95:5 (weight ratio), and both the main agent and the curing agent contain no organic solvent.

However, although having hydrolysis resistance, the synthetic leather disclosed in Japanese Patent No. 3142102, Japanese Patent Laid-Open No. 2003-119314, Japanese Patent Laid-Open No. 2004-346094, Japanese Patent No. 4177318 and Japanese Patent Laid-Open No. 2009-185260 is not sufficient in sweat resistance in an application where high durability is required, for example, an automobile sheet.

Japanese Patent Laid-Open No. 2013-108196 proposes synthetic leather formed of a specific polycarbonate diol (copolymerized polycarbonate diol derived from 1,5-pentanediol and 1,6-hexanediol) in order to provide synthetic leather which has excellent balance of physical properties such as sweat resistance and flexibility and furthermore which causes no crack or wrinkle during storage. However, the polycarbonate diol described in Japanese Patent Laid-Open No. 2013-108196 requires the use of a large amount of an organic solvent in polyurethane polymerization, and is desired to be further improved from the viewpoint of environmental load.

Japanese Patent Laid-Open No. 2016-8234 proposes a polyurethane for synthetic leather having excellent balance of physical properties including flexibility, chemical resistance, low-temperature characteristics, heat resistance and texture. There is here proposed a polyurethane for synthetic leather, obtained by reacting at least (a) a compound having two or more isocyanate groups in one molecule, (b) a chain extender and (c) a polycarbonate diol, in which the polycarbonate diol (c) is a polycarbonate diol having a hydroxyl value of 20 mg-KOH/g or more and 45 mg-KOH/g or less, having a glass transition temperature of -30°C or less, as measured by a differential scanning calorimeter, and allowing a dihydroxy compound obtained by hydrolysis of the polycarbonate diol to have an average number of carbon atoms of 3 or more and 5.5 or less. However, the polyurethane for synthetic leather, disclosed in Japanese Patent Laid-Open No. 2016-8234, also requires the use of a large amount of an organic solvent in polyurethane polymerization, and is not desirable from the viewpoint of environmental load.

In recent years, an environment-responsive polyurethane has been proposed. For example, Japanese Patent Laid-Open No. 2014-105250 proposes a two-liquid-type non-solvent polyurethane for synthetic leather, the polyurethane including a urethane prepolymer composition used in the form of a high molecular product by a reaction of a crosslinking agent with active hydrogen in a component, in which the urethane prepolymer composition contains at least 20 to 80% by mass of a hydroxyl group-terminated urethane prepolymer having a hydroxyl value of 10 to 100 mgKOH/g and further contains 20 to 80% by mass of an oligomer having a hydroxyl value of 20 to 400 mgKOH/g and having no urethane bond, and capable of being crosslinked with the crosslinking agent while serving as a medium of the polymer, and is at least in the form of a liquid at a temperature of 30°C with having a substantially 1000 of a non-volatile content, and the polyurethane including 90 to 150% by equivalent of a polyisocyanate crosslinking agent having a NCO content of 5 to 35% by mass relative to the average hydroxyl value of the urethane prepolymer composition.

However, the polyurethane prepolymer composition for synthetic leather disclosed in Japanese Patent Laid-Open No. 2014-105250 leads to the use of an ether-based polyol having a hydroxyl value of 20 to 400 mgKOH/g, such as poly-THF or THF-neopentyl glycol copolymerized polyol, as an oligomer having no urethane bond in order to achieve non-solvent composition, and thus has reduced heat resistance and has the problem of limited applications.

## Summary of Invention

### Problems to be Solved by Invention

An object of the present invention in view of the above problems is to provide a polyester polycarbonate polyol capable of providing a polyurethane having excellent balance of physical properties including flexibility (texture), chemical resistance, hydrolysis resistance, low-temperature characteristics and heat resistance, and a method for producing the same.

### Means for Solving Problems

The present inventors have made intensive studies, and as a result, have found that a polyester polycarbonate polyol having a predetermined structure can be used to thereby provide a polyurethane having excellent balance of physical properties including flexibility (texture), chemical resistance, hydrolysis resistance, low-temperature characteristics and heat resistance, for example, provide synthetic leather having excellent balance of physical properties including wear resistance and adhesiveness. The inventors have also found that a specific catalyst is useful for production of the polyester polycarbonate polyol, leading to completion of the present invention.

In other words, the present invention includes the following aspects.

[1] A polyester polycarbonate polyol comprising a repeating unit represented by the following formula (1) and a repeating unit represented by the following formula (2), and comprising a hydroxyl group at a molecular terminal, the polyester polycarbonate polyol having a hydroxyl value of 37 to 86 mgKOH/g and a carbonate group content of 15 to 40% by mass:

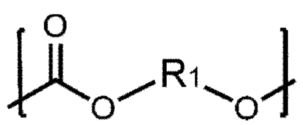

(1)

wherein $R_1$ is a divalent linear aliphatic or alicyclic hydrocarbon having 2 to 15 carbon atoms;

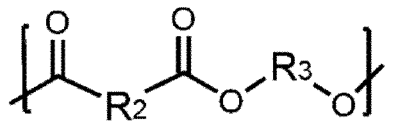 (2)

wherein $R_2$ is a divalent hydrocarbon having 2 to 15 carbon atoms and $R_3$ is a divalent linear aliphatic or alicyclic hydrocarbon having 2 to 15 carbon atoms.

[2] The polyester polycarbonate polyol according to [1], wherein a molar ratio between a structural unit represented by the formula (1) and a structural unit represented by the formula (2) is 50/50 to 95/5.

[3] The polyester polycarbonate polyol according to [1] or [2], wherein 50% by mol or more of the repeating unit represented by the formula (1) comprises at least two repeating units selected from the group consisting of formula (3), formula (4), and formula (5).

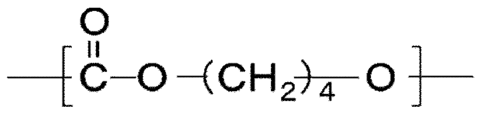 (3)

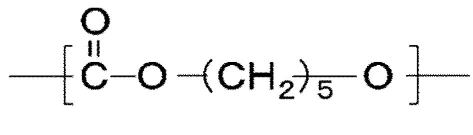 (4)

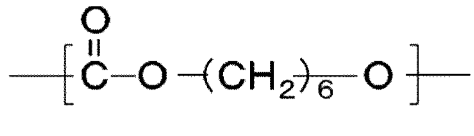 (5)

[4] The polyester polycarbonate polyol according to [3], wherein 50% by mol or more of the repeating unit represented by the formula (1) comprises repeating units of formula (4) and formula (5).

[5] The polyester polycarbonate polyol according to [3], wherein 50% by mol or more of the repeating unit represented by the formula (1) comprises repeating units of formula (3) and formula (5), and the carbonate group content is 21 to 40% by mass.

[6] Synthetic leather produced by using the polyester polycarbonate polyol according to any one of [1] to [5].

[7] A method for producing the polyester polycarbonate polyol according to [1] or [2], comprising using a metal alkoxide as a catalyst.

[8] The method for producing the polyester polycarbonate polyol according to [7], wherein the metal alkoxide is an alkoxide of a metal of Group 4 in the periodic table.

Advantages of Invention

The polyester polycarbonate polyol of the present invention can be used to thereby provide a polyurethane having excellent balance of physical properties of flexibility (texture), chemical resistance, low-temperature characteristics, heat resistance, hydrolysis resistance, wear resistance and adhesiveness, and is suitably used as a polyol for production of synthetic leather. The present invention can also provide a method for producing such a polyester polycarbonate polyol.

Brief Description of Drawing

FIG. 1 is a cross-sectional view of one example of synthetic leather using the polyester polycarbonate polyol of the present invention; and

FIG. 2 is a diagram illustrating one example of a production process chart of synthetic leather by use of the polyester polycarbonate polyol of the present invention.

Mode for Carrying Out Invention

Hereinafter, a mode for carrying out the present invention (hereinafter, abbreviated as "the present embodiment".) is described in detail. The present invention is not limited to the following embodiments, and can be variously modified and then carried out within the gist thereof.

A polyester polycarbonate polyol of the present embodiment is a polyester polycarbonate polyol containing a repeating unit represented by the following formula (1) and a repeating unit represented by the following formula (2), and containing a hydroxyl group at a molecular terminal, the polyester polycarbonate polyol having a hydroxyl value of 37 to 86 mgKOH/g and a carbonate group content of 15 to 40% by mass:

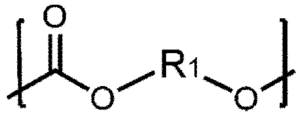 (1)

wherein $R_1$ is a divalent linear aliphatic or alicyclic hydrocarbon having 2 to 15 carbon atoms;

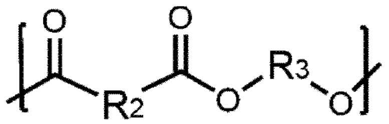 (2)

wherein $R_2$ is a divalent hydrocarbon having 2 to 15 carbon atoms and $R_3$ is a divalent linear aliphatic or alicyclic hydrocarbon having 2 to 15 carbon atoms.

The polyester polycarbonate polyol of the present embodiment can be usually cured by using a curing agent such as polyisocyanate, and can be used as a polyurethane for various molded products, adhesives, coating agents, or the like.

<Polyester polycarbonate polyol>

The polyester polycarbonate polyol of the present embodiment is a polyester polycarbonate polyol having a hydroxyl value of 37 to 86 mgKOH/g, preferably 45 to 75 mgKOH/g, further preferably 50 to 65 mgKOH/g.

With the hydroxyl value of the component (a) of 37 mgKOH/g or more, a polyurethane obtained tends to be excellent in strength and chemical resistance. With the hydroxyl value of the polyester polycarbonate polyol of 86 mgKOH/g or less, synthetic leather obtained tends to be enhanced in flexibility (texture) and low-temperature characteristics.

The melt viscosity at 50°C of the polyester polycarbonate polyol is preferably 1000 to 9000 mPa·s, more preferably 1500 to 8500 mPa·s, further preferably 2000 to 7000 mPa·s. With the melt viscosity at 50°C of the polyester polycarbonate polyol of 1000 mPa·s or more, a polyurethane obtained tends to be enhanced in flexibility and low-temperature characteristics. With the melt viscosity at 50°C of the polyester polycarbonate polyol is 6000 mPa·s or less, not only a polyurethane excellent in strength and chemical resistance tends to be obtained, but also the amount of a solvent used can be decreased in the case of using the solvent in polyurethane production.

The hydroxyl value in one molecule of the polyester polycarbonate polyol is preferably 1.7 to 3.5, more preferably 1.8 to 3.0, further preferably 2.0 to 2.5. With the hydroxyl value of 1.7 or more, a polyurethane obtained tends to be enhanced in strength, chemical resistance, heat resistance and hydrolysis resistance. With the hydroxyl value of 3.0 or less, not only a proper curing time is achieved in polyurethane production, but also a polyurethane obtained achieves flexibility.

The carbonate group content in one molecule of a polyester polycarbonate diol of the present embodiment is 15 to 40% by mass, more preferably 21 to 40% by mass, further preferably 25 to 35% by mass, particularly preferably 25 to 30% by mass. With the carbonate group content of 15% by mass or more, a polyurethane obtained tends to be excellent in strength, chemical resistance, wear resistance and hydrolysis resistance. With the carbonate group content of 40% by mass or less, not only a polyurethane obtained tends to be excellent in low-temperature characteristics and flexibility, but also the viscosity of a polyurethane obtained is kept low and thus the appearance of a polyurethane product tends to be excellent.

The carbonate group content is an amount of a carbonate group contained in one molecule of the polyester polycarbonate diol, and is specifically determined by the following expression (6).

$$\text{Carbonate group content (\%)} = (\text{Molecular weight of carbonate group}) \times (\text{Number of carbonate groups in one molecule}) / (\text{Number average molecular weight of polyester polycarbonate polyol}) \times 100 \quad (6)$$

wherein the molecular weight of a carbonate group (-O-C=O-O-) is 60.01.

The polyester polycarbonate polyol of the present embodiment contains a repeating unit represented by the following formula (1) and a repeating unit represented by the following formula (2), and contains a hydroxyl group at the molecular terminal. The polyester polycarbonate polyol of the present embodiment is not particularly limited in terms of the production method thereof and can be, for example, synthesized by using a bifunctional diol compound (if necessary, further a tri- or higher functional polyhydric alcohol), a dibasic acid and a carbonic acid ester, as raw materials, according to a transesterification reaction described in, for example, "Polymer Reviews vol. 9, pages 9 to 20".

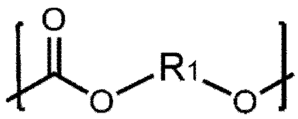 (1)

(wherein $R_1$ is a divalent linear aliphatic or alicyclic hydrocarbon having 2 to 15 carbon atoms.)

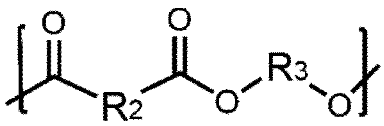 (2)

(wherein $R_2$ is a divalent hydrocarbon having 2 to 15 carbon atoms and $R_3$ is a divalent linear aliphatic or alicyclic hydrocarbon having 2 to 15 carbon atoms.)

The bifunctional diol compound for use in the transesterification reaction is not particularly limited, and examples thereof include diols each having a divalent linear aliphatic or alicyclic hydrocarbon backbone having 2 to 15 carbon atoms. Specific examples of the bifunctional diol compound include ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,14-tetradecanediol, 1,15-pentadecanediol, 1,3-cyclohexanediol, 1,4-cyclohexanediol and 1,4-cyclohexanedimethanol.

Such a bifunctional diol compound may be used singly or in combinations of two or more kinds thereof.

In particular, a linear alkylene diol having 3 to 9 carbon atoms is preferable and a linear alkylene diol having 4 to 6 carbon atoms is more preferable, from the viewpoint that a polyurethane having excellent flexibility (touch), chemical resistance, low-temperature characteristics and heat resistance is obtained. Two or more kinds of linear alkylene diols are preferably used in combination.

The bifunctional diol compound has 2 or more carbon atoms and thus not only the viscosity of the polyester polycarbonate polyol can be kept low and the amount of an organic solvent used can be decreased, but also the polyurethane obtained tends to be enhanced in flexibility and low-temperature characteristics. The bifunctional diol compound has 15 or less carbon atoms and thus the polyurethane obtained tends to have excellent chemical resistance.

With the use of two or more kinds of the bifunctional diol compounds in combination, a polyester polycarbonate polyol obtained has reduced regularity of a structural unit and reduced crystallinity, resulting in a tendency to not only obtain a liquid polyester polycarbonate polyol at ordinary temperature (25°C), but also enhance flexibility of a polyurethane. In a case where an organic solvent is used in polyurethane production, the amount of the organic solvent used tends to be able to be decreased.

In the present embodiment, not only such a bifunctional diol, but also, if necessary, a tri- or higher functional polyhydric alcohol compound can be used as each raw material of the polyester polycarbonate polyol.

The polyhydric alcohol compound is not particularly limited, and examples thereof include trimethylolethane, trimethylolpropane, hexanetriol, pentaerythritol and glycerin. With the use of the polyhydric alcohol, the hydroxyl value in one molecule can be easily adjusted in the range of 1.7 to 3.5.

In the present embodiment, 50% by mol or more of the repeating unit represented by the formula (1) preferably contains at least two repeating units selected from the group consisting of formula (3), formula (4), and formula (5). The contents of the repeating units are each preferably 70% by mol or more, further preferably 80% by mol or more.

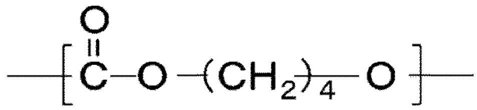
(3)

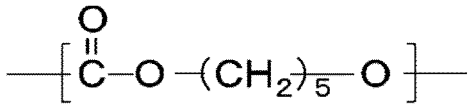
(4)

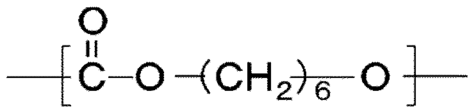
(5)

With at least two repeating units selected from the group consisting of the formula (3), formula (4) and formula (5) being contained at 50% by mol or more relative to the repeating unit represented by the formula (1), not only a polyurethane obtained has excellent flexibility (touch), chemical resistance, low-temperature characteristics and heat resistance, but also the amount of a solvent used tends to be able to be decreased in the case of the solvent in polyurethane production. From the same viewpoints, 50% by mol or more of the repeating unit represented by the formula (1) preferably contains repeating units of formula (4) and formula (5), and 50% by mol or more of the repeating unit represented by the formula (1) preferably contains repeating units of formula (3) and formula (5) and the carbonate group content is preferably 21 to 40% by mass.

In the present embodiment, in a case where two repeating units are selected from the formula (3), formula (4) and formula (5), the ratio between the two repeating units on a molar ratio is 90:10 to 10:90, preferably 70:30 to 30:70. With the ratio of copolymerization being in the above range, the crystallinity of the polyester polycarbonate polyol tends to be reduced to thereby obtain a polyurethane having high flexibility, favorable low-temperature characteristics and touch. Furthermore, when the ratio of copolymerization is in this range, the amount of a solvent used tends to be able to be decreased in the case of the solvent in polyurethane production.

In the present embodiment, in a case where three repeating units are selected from the formula (3), formula (4) and formula (5), the proportion of each of the structural units of the formula (3), formula (4) and formula (5) is preferably 5% by mol or more, more preferably 10% by mol or more, further preferably 20% by mol or more under the assumption that the total of such three repeating units of the formula (3), formula (4) and formula (5) is 100% by mol. The proportion of each of such three repeating units of the formula (3), formula (4) and formula (5) in the total of such three repeating units of the formula (3), formula (4) and formula (5) is in the above range and thus the crystallinity of a polycarbonate diol tends to be reduced to thereby obtain a polyurethane having high flexibility, favorable low-temperature characteristics and touch. Furthermore, with the proportion of each of the three repeating units of the formula (3), formula (4) and formula (5) being in the above range, the amount of a solvent used tends to be able to be decreased in the case of the solvent in polyurethane production.

Examples of the dibasic acid which can be used for synthesis of the polyester polycarbonate polyol of the present embodiment include aliphatic and/or aromatic dicarboxylic acid(s). Examples of the aliphatic dicarboxylic acid include oxalic acid, malonic acid, succinic acid, glutaric acid, adipic acid, pimelic acid, suberic acid, azelaic acid and sebacic acid. Examples of the aromatic dicarboxylic acid include phthalic acid, isophthalic acid and terephthalic acid. The aliphatic dicarboxylic acid is particularly preferable in order to obtain a polyurethane excellent in flexibility, and in particular, succinic acid, glutaric acid or adipic acid is preferable. Such a dicarboxylic acid can also be used in the form of an ester with an alcohol, and can be used in the form of a methyl ester such as dimethyl succinate, dimethyl glutarate, or dimethyl adipate. Such a dicarboxylic acid may be used singly or as a mixture of a plurality of two or more kinds thereof.

The molar ratio between the polycarbonate structural unit represented by the formula (1) and the polyester structural unit represented by the formula (2) in the polyester polycarbonate polyol of the present embodiment is preferably 50/50 to 95/5, more preferably 60/40 to 90/10, further preferably 70/30 to 80/20.

With the molar ratio between the polycarbonate structural unit represented by the formula (1) and the polyester structural unit represented by the formula (2) being in the above range, a polyurethane excellent in flexibility, chemical resistance, adhesiveness and hydrolysis resistance can be obtained.

Examples of the carbonic acid ester which can be used for synthesis of the polyester polycarbonate polyol of

the present embodiment include dialkyl carbonates such as dimethyl carbonate, diethyl carbonate, dipropyl carbonate and dibutyl carbonate; diaryl carbonates such as diphenyl carbonate; and alkylene carbonates such as ethylene carbonate, trimethylene carbonate, 1,2-propylene carbonate, 1,2-butylene carbonate, 1,3-butylene carbonate and 1,2-pentylene carbonate. The carbonic acid ester here used is preferably dimethyl carbonate, diethyl carbonate, diphenyl carbonate or ethylene carbonate from the viewpoints of availability and ease of condition setting of a polymerization reaction.

A catalyst may or may not be added in production of the polyester polycarbonate polyol of the present embodiment. In a case where a catalyst is added, the catalyst can be freely selected from catalysts for use in a usual transesterification reaction. The catalyst here used is, for example, any of metals such as lithium, sodium, potassium, rubidium, cesium, magnesium, calcium, strontium, barium, zinc, aluminum, titanium, zirconium, hafnium, cobalt, germanium, tin, lead, antimony, arsenic and cerium, and metal salts thereof, metal alkoxides thereof and organic compounds including such metals. Among these catalysts, a metal alkoxide is preferable, and an alkoxide of a metal selected from titanium, zirconium and hafnium which are metals of Group 4 in the periodic table is particularly preferable because of being hardly affected by water generated and being capable of maintaining high activity. The amount of the catalyst used is usually 0.00001 to 0.1% by mass, preferably 0.001 to 0.05% by mass, further preferably 0.01 to 0.03% by mass based on the mass of the bifunctional diol compound as a raw material and the tri- or higher functional polyhydric alcohol, if necessary, optionally included. With the amount of the catalyst of 0.0001% by mass or more, the reaction speed can be reduced and productivity is improved. With the amount of the catalyst of 0.1% by mass or less, the color tone of the polyester polycarbonate polyol is excellent.

The method for producing the polyester polycarbonate polyol in the present embodiment can include synthesis by a transesterification reaction using the bifunctional diol compound (if necessary, further the tri- or higher functional polyhydric alcohol), the dibasic acid, and the carbonic acid ester, as raw materials, as described above.

More specifically, the transesterification reaction is performed according to the following procedure.

First, one or more bifunctional diol compounds at a predetermined ratio (if necessary, further one or more tri- or higher functional polyhydric alcohols at a predetermined ratio), dibasic acid at a predetermined ratio, and one or more carbonic acid esters at a predetermined ratio are admixed and subjected to a transesterification reaction under ordinary pressure or reduced pressure in the presence or absence of a transesterification catalyst at a temperature of 100 to 200°C, preferably 140 to 180°C.

Subsequently, any alcohol derived from the carbonic acid ester and water (in a case where a dibasic acid ester is used, a monoalcohol derived from the dibasic acid ester) derived from the dibasic acid, which are generated during the reaction, are distilled off to thereby obtain a polyester polycarbonate polyol having a molecular weight of about 300 to 500 g /mol.

Next, unreacted carbonic acid esters and bifunctional diols (and tri- or higher functional polyhydric alcohols optionally included), and water (in a case where a dibasic acid ester is used, a monoalcohol derived from the dibasic acid ester) generated in a condensation reaction of the dibasic acid are distilled off under reduced pressure at 130 to 230°C, preferably 150 to 200°C, and the polyester polycarbonate polyol having a desired hydroxyl value can be obtained by the condensation reaction.

The hydroxyl value of the polyester polycarbonate polyol can be adjusted by controlling the initial ratio of components loaded, the amounts of raw materials distilled off in production, and the amount of a reaction product.

The method for producing the polyester polycarbonate polyol of the present embodiment can include producing a polycarbonate polyol and a polyester polyol in advance, then mixing the polycarbonate polyol and the polyester polyol, and subjecting the resulting mixture to a transesterification reaction under stirring in the presence or absence of the transesterification catalyst at a temperature of 100 to 200°C.

In one aspect, the present embodiment relates to the above method for producing the polyester polycarbonate polyol of the present embodiment, including using a metal alkoxide as a catalyst. The catalyst is a catalyst of a transesterification reaction, and is preferably an alkoxide of a metal of Group 4 in the periodic table.

In one aspect, the above production method includes a step of subjecting the bifunctional diol compound (if necessary, further the tri- or higher functional polyhydric alcohol), the dibasic acid, and the carbonic acid ester to a transesterification reaction by use of a metal alkoxide as a catalyst.

In one aspect, the above production method includes a step of reacting the bifunctional diol compound (if necessary, further the tri- or higher functional polyhydric alcohol) and the dibasic acid to thereby obtain a polycarbonate polyol, a step of reacting the dibasic acid and the carbonic acid ester to thereby obtain a polyester polyol, and a step of subjecting the polycarbonate polyol and the polyester polyol to a transesterification reaction by use of a metal alkoxide as a catalyst.

In a method for producing a polyurethane by using the polyester polycarbonate polyol of the present embodiment (hereinafter, component (a)), a curing agent such as a polyisocyanate (hereinafter, component (b)) and, if necessary, a chain extender (hereinafter, component (c)) are usually used.

In the method for producing a polyurethane by using the polyester polycarbonate polyol of the present embodiment, a curable composition may be obtained as a mixture obtained by compounding the component (a), the component (b) and the component (c) constituting the composition at one time (one-shot method), or a curable composition may be obtained as a mixture obtained by preparing an isocyanate-terminated prepolymer composition obtained by reacting the component (a) with the component (b) in advance, and compounding the isocyanate-terminated prepolymer composition and the component (c) (prepolymer method).

The polyisocyanate used in the case of production of a polyurethane by using the polyester polycarbonate polyol of the present embodiment can be usually a polyisocyanate having an average number of functional groups per molecule, of 2 to 6 (component (b)).

Examples of the polyisocyanates of the component (b) can include aromatic diisocyanates such as 2,4-tolylene diisocyanate, 2,6-tolylene diisocyanate and a mixture thereof, diphenylmethane-4,4'-diisocyanate (MDI), naphthalene-1,5-diisocyanate (NDI), 3,3'-dimethyl-4,4'biphenylene diisocyanate (TODI) and polymethylenepolyphenylene polyisocyanate (PMDI); aromatic aliphatic diisocyanates such as xylylene diisocyanate (XDI) and phenylene diisocyanate; and aliphatic diisocyanates such as 4,4'-methylenebiscyclohexyl diisocyanate (hydrogenation (also referred to as hydrogenated) MDI), hexamethylene diisocyanate (HDI), isophorone diisocyanate (IPDI) and cyclohexane diisocyanate (hydrogenated XDI).

The polyisocyanates of the component (b) can also be a polyisocyanate having 2.1 or more isocyanate groups on average in one molecule. The polyisocyanate having 2.1 or more isocyanate groups on average in one molecule can be any of aromatic polyisocyanates such as crude MDI and crude TDI; derivatives of aliphatic isocyanates such as HDI and IPDI, specifically diisocyanate derivatives such as biuret, allophanate, uretdione and isocyanurate; and polyhydric alcohol adducts.

The polyisocyanate having 2.1 or more isocyanate groups in one molecule is not particularly limited, and is, for example, available as any of Sumijule 44S and 44V70 (both manufactured by Sumika Bayer Urethane Co., Ltd.), Desmodur HL (manufactured by Sumika Bayer Urethane Co., Ltd.) as a copolymer of TDI and HDI, various Duranates manufactured by Asahi Kasei Corporation, namely, Duranate 24A-100, Duranate 22A-75PX, Duranate 18H-70B, Duranate 21S-75E, Duranate THA-100, Duranate TPA-100, Duranate TKA-100, Duranate MFA-75X, Duranate TSA-100, Duranate TSS-100, Duranate TSE-100, Duranate D-101, Duranate D-201, Duranate P-301-75E, Duranate E-402-90T, Duranate E-402-90T, Duranate E-405-80T, Duranate ME20-100, Duranate 17B-60PX, Duranate TPA-B80X, Duranate MF-B60X, Duranate E-402-B80T, Duranate ME20-B80S, Duranate WB40-100, Duranate WB40-80D, Duranate WT20-100 and Duranate WT30-100.

The polyisocyanate as the component (b) to be used is preferably an aromatic polyisocyanate such as MDI. Such an aromatic polyisocyanate is used to result in a tendency to obtain a polyurethane having excellent mechanical properties. A curable composition, in which such an aromatic polyisocyanate such as MDI is used as the component (b), can be suitably used as an adhesive of a base fabric and a skin layer of synthetic leather.

A curable composition, in which an aliphatic polyisocyanate such as hydrogenated MDI is used as the component (b), can provide synthetic leather having an excellent weather resistance and thus is suitably used as, for example, a curable composition for synthetic leather, for a skin layer.

The component (b) to be used can also be, for example, a so-called blocked isocyanate obtained by blocking with any known blocking agent, for example, lower alcohols such as butanol and 2-ethylhexanol, methyl ethyl ketone oxime, lactams, phenols, imidazoles, and active methylene compounds.

In a case where a polyurethane is produced by using the polyester polycarbonate polyol of the present embodiment, a chain extender (component (c)) can be, if necessary, used. The chain extender is appropriately, if necessary, used because the chain extender, while is used for enhancing wear properties and strength of a polyurethane obtained, may also cause a polyurethane obtained to be deteriorated in flexibility. The chain extender is not particularly limited, and examples thereof include short-chain diols such as ethylene glycol and 1,4-butanediol; and polyhydric alcohols such as trimethylolethane, trimethylolpropane, hexanetriol, pentaerythritol and glycerin. The chain extender is not particularly limited and examples thereof include diamines such as ethylenediamine, propylenediamine, hexamethylenediamine, tolylenediamine, xylylenediamine, diphenyldiamine, diaminodiphenylmethane, diaminocyclohexylmethane, piperazine, 2-methylpiperazine, isophoronediamine and 3,3'-dichloro-4,4'-diaminodiphenylmethane (MOCA), and water.

The amount of the chain extender added based on the total of the component (a) and the component (b) is preferably 30% by mass or less, more preferably 3% by mass or more and 20% by mass or less, further preferably 5% by mass or more and 15% by mass or less. By using a polyhydric alcohol as the chain extender, the polyurethane obtained can have increased crosslinking density and enhanced strength, wear properties and chemical resistance.

The amounts of the polyester polycarbonate polyol as the component (a), the polyisocyanate as the component (b) and the chain extender as the component (c) to be used are adjusted so that the amount represented as [Isocyanate equivalent of component (b)]/[Total of hydroxyl equivalents of both component (a) and component (c)] is preferably 0.7 to 1.3, more preferably 0.8 to 1.2, further preferably 0.9 to 1.1. With the [Isocyanate equivalent of component (b)]/[Total of hydroxyl equivalents of both component (a) and component (c)] of 0.7 or more and 1.3 or less, a polyurethane obtained can be properly controlled in molecular weight and mechanical properties such as strength, elongation and wear resistance tend to be excellent.

In a case where a polyurethane is produced by using the polyester polycarbonate polyol of the present embodiment, an inert organic solvent may be, if necessary, contained in order to adjust processability in urethane production. The content of the inert organic solvent relative to the polyurethane is preferably 80% by mass or less, more preferably 70% by mass or less, further preferably 60% by mass or less. Addition of the inert organic solvent is effective in order to not only decrease the viscosity of the curable composition and enhance processability , but also more enhance the appearance of a polyurethane obtained.

The inert organic solvent is not particularly limited as long as it is an organic solvent substantially inert to a polyisocyanate, and is preferably one having no active hydrogen. The inert organic solvent is not particularly limited, and examples thereof include hydrocarbons such as pentane, hexane, heptane, octane, decane, petroleum ether, petroleum benzine, ligroin, petroleum spirits, cyclohexane and methylcyclohexane; fluorine-based inert liquids, for example, fluorinated oils such as trichlorofluoroethane, tetrachlorodifluoroethane and perfluoroether; and perfluorocyclohexane, perfluorobutyltetrahydrofuran, perfluorodecalin, perfluoro-n-butylamine, perfluoropolyether and dimethylpolysiloxane. These may be used singly or as a mixture thereof. Examples of the inert organic solvent further include any single or mixed solvent of methyl ethyl ketone (also designated as MEK), acetone, N,N-dimethylformamide (DMF), ethyl acetate, butyl acetate, toluene and xylene.

In a case where a polyurethane is produced by using the polyester polycarbonate polyol of the present embodiment, any polyol other than the polyester polycarbonate polyol may be, if necessary, used in combination. Such any polyol other than the polyester polycarbonate polyol is not particularly limited, and examples thereof include polyether-based polyol, polyester-based polyol, polycarbonate-based polyol, polyolefin-based polyol, polybutadiene-based polyol, polyacrylic polyol, and oil-modified polyol.

The amount of such any polyol other than the polyester polycarbonate polyol, added, based on the total mass of the polyester polycarbonate polyol and such any polyol other than the polyester polycarbonate polyol is preferably 50% by mass or less, more preferably 30% by mass or less, further preferably 20% by mass or less.

<Other additive(s)>

In a case where a polyurethane is produced by using the polyester polycarbonate polyol of the present embodiment, any additive(s) such as a curing accelerator (catalyst), a filler, a flame retardant, a dye, an organic or inorganic pigment, a release agent, a fluidity modifier, a plasticizer, an antioxidant, an ultraviolet absorber, a light stabilizer, a defoamer, a leveling agent, a colorant and/or a foaming agent can be added depending on the intended use.

The curing accelerator is not particularly limited, and examples thereof include amines and a metal catalyst.

The curing accelerator being any of amines is not particularly limited, and examples thereof include monoamines such as triethylamine and N,N-dimethylcyclohexylamine, diamines such as tetramethylethylenediamine, and triamines, cyclic amines, alcohol amines such as dimethylethanolamine, and ether amines.

The metal catalyst is not particularly limited, and examples thereof include potassium acetate, potassium 2-ethylhexanoate, calcium acetate, lead octylate, dibutyltin dilaurate, tin octylate, bismuth neodecanoate, bismuth oxycarbonate, bismuth 2-ethylhexanoate, zinc octylate, zincneodecanoate, phosphine and phosphorine.

The filler and the pigment are not particularly limited, and examples thereof include a woven fabric, a glass fiber, a carbon fiber, a polyamide fiber, mica, kaolin, bentonite, a metal powder, an azo pigment, carbon black, clay, silica, talc, gypsum, alumina white and barium carbonate.

The release agent, the fluidity modifier and the leveling agent are not particularly limited, and examples thereof include silicone, aerosil, wax, stearate and polysiloxane such as BYK-331 (manufactured by BYK-Chemie).

In a case where a polyurethane is produced by using the polyester polycarbonate polyol of the present embodiment, an oxidation inhibitor, a light stabilizer, and a heat stabilizer are preferably used as the additive (s) .

The oxidation inhibitor here used is not particularly limited, and can be, for example, any of phosphorus compounds such as aliphatic, aromatic or alkyl-substituted aromatic esters of phosphoric acid or phosphorus acid, hypophosphorous acid derivatives, phenylphosphonic acid, phenylphosphinic acid, diphenylphosphonic acid, polyphosphonate, dialkyl pentaerythritol diphosphite and dialkylbisphenol A diphosphite; phenol-based derivatives, in particular, hindered phenol compounds, and sulfur-containing compounds such as thioether-based, dithionic acid salt-based, mercaptobenzimidazole-based, and thiocarbanilide-based compounds and thiodipropionic acid esters; and tin-based compounds such as tin malate and dibutyltin monooxide. These may be used singly or in combinations of two or more kinds thereof.

<Method for producing synthetic leather>

Synthetic leather can be produced by applying the method for producing a polyurethane by using the polyester polycarbonate polyol of the present embodiment. Examples of the method for producing synthetic leather by using the

polyester polycarbonate polyol of the present embodiment include a wet method involving wet coagulation by coating or impregnating a base material (base fabric) with the polyurethane produced by using the polyester polycarbonate polyol of the present embodiment, and a dry method involving coating release paper or a base material (base fabric) with a polyurethane produced by using the polyester polycarbonate polyol of the present embodiment and drying the resultant.

The method for producing synthetic leather to be employed can also be a transfer coating method (one dry method) involving coating release paper with a polyurethane produced by using the polyester polycarbonate polyol of the present embodiment to form a skin material, then laminating thereon a base material (base fabric) with the polyurethane produced by using the polyester polycarbonate polyol of the present embodiment, used as an adhesion layer, and thereafter removing the release paper.

The method for producing synthetic leather is described below with a dry method as an example.

The base material (base fabric) here used can be any of various base materials, and examples thereof include a fibrous base material. Examples of the fibrous base material include a fiber aggregate obtained by forming a fiber into a non-woven fabric, a woven fabric, a net cloth or the like, or a fiber aggregate in which each fiber is bound by an elastic polymer. Examples of the fiber for use in the fiber aggregate include natural fibers such as cotton, linen and wool, recycled or semisynthetic fibers such as rayon and acetate, and synthetic fibers such as polyamide, polyester, polyacrylonitrile, polyvinyl alcohol and polyolefin. Such a fiber may be a single spun fiber or a mixed spun fiber. Other examples of the base material include paper, release paper, a plastic film such as polyester or polyolefin, a plate of a metal such as aluminum, and a glass plate.

The polyurethane produced by using the polyester polycarbonate polyol of the present embodiment can be subjected to coating by a method generally used. Examples of a coating tool can include a floating knife coater, a knife-over-roll coater, a reverse roll coater, a roll doctor coater, a gravure roll coater and a kiss roll coater.

Synthetic leather obtained can be used as it is. Alternatively, synthetic leather can also be obtained in a mode where the synthetic leather is coated with a polymer solution or emulsion of a polyurethane resin, vinyl chloride, a cellulose resin or the like, in order that various properties are further imparted. Synthetic leather can also be obtained in a mode of a laminate obtained by laminating a coating film obtained by drying of the polymer solution or emulsion applied separately on release paper and then peeling the release paper.

Hereinafter, the present embodiment is described with reference to the drawings. The drawings and production conditions described below correspond to one mode of the present embodiment, and the present embodiment is not limited thereto.

FIG. 1 is a schematic cross-sectional view of a synthetic leather laminate produced by a dry method illustrated in FIG. 2. The structure of the laminate has a skin layer 2 on a base material (non-woven fabric) 4 with an adhesion layer 3 being interposed therebetween. Release paper 1 used in production, although is attached onto the outermost layer, is peeled in use.

FIG. 2 is a schematic diagram illustrating one method for producing a dry synthetic leather laminate sheet by use of a polyurethane produced by using the polyester polycarbonate polyol of the present embodiment. In the production method, first, a curable composition obtained by mixing each raw material adjusted at a predetermined temperature in advance, by a mixing head 5, is allowed to flow down onto the release paper 1 (to which a leather-like pattern is usually applied).

In a case where the one-shot method is applied, the component (a), the component (b) and, if necessary, the component (c), and, if necessary, the inert organic solvent and the additive(s) are separately continuously fed to, or two including the component (b) and raw materials (mixture obtained by mixing the component (a), the component (c), if necessary, the inert organic solvent, and the additive(s)) other than such a component are continuously fed to the mixing head 5 for mixing, and the resulting mixture is allowed to flow down onto the release paper 1.

In a case where the prepolymer method is applied, the prepolymer composition, and a mixture of the polycarbonate polyol (component (a)) not prepolymerized and/or the chain extender (component (c)), if necessary, the inert organic solvent and the additive(s) are continuously fed to the mixing head 5 for mixing, and the mixture is allowed to flow down onto the release paper 1.

The temperature of each of the components before mixing is usually adjusted to 20 to 80°C, preferably 30 to 70°C, more preferably 40 to 60°C. The temperature of the mixing head 5 is also usually adjusted to 20°C to 80°C, preferably 30 to 70°C, more preferably 40 to 60°C. The temperature of each of the components before mixing and the temperature of the mixing head 5 are each 20°C or more and thus raw materials used, in particular, the polycarbonate polyols tend to be decreased in viscosity and the flow rate tends to be stabilized. With the temperature of each of the components before mixing and the temperature of the mixing head 5 of 80°C or less, the curing rate of a curable polyurethane produced from the polyester polycarbonate polyol of the present embodiment tends to be properly controlled, the curable polyurethane tends to be inhibited from being rapidly increased in viscosity, and synthetic leather having a uniform thickness tends to be obtained.

Thereafter, a sheet having a certain thickness is formed through a coating roll 8 and then allowed to pass

through a drier 11 to perform curing, and drying of the inert organic solvent, thereby forming the skin layer 2 of the synthetic leather. The temperature of the drier is usually set to 60 to 150°C, preferably 70 to 130°C, more preferably 80 to 120°C. The drying time is usually, 2 minutes to 15 minutes, preferably 3 minutes to 10 minutes, more preferably 4 minutes to 7 minutes.

Next, a curable composition is obtained by mixing each raw material of a curable polyurethane composition adjusted at a predetermined temperature in advance, by a mixing head 6, and is allowed to flow down to thereby form the adhesion layer 3.

In a case where the one-shot method is applied in production of the adhesion layer, the component (a), the component (b) and the component (c), and, if necessary, the inert organic solvent, and the additive(s) are separately continuously fed to, or two containing the component (b) and a raw material (a mixture obtained by mixing the component (a), the component (c), if necessary, the inert organic solvent, and the additive(s)) other than such a component are continuously fed to the mixing head 6 for mixing, and the resulting mixture is allowed to flow down onto the skin layer.

In a case where the prepolymer method is applied in production of the adhesion layer, the prepolymer composition, the polyol (component (a)) not prepolymerized, and, if necessary, the inert organic solvent and the additive(s) are separately continuously fed to, or two containing the prepolymer composition and a mixture of raw materials (polyol (component (a)) not prepolymerized and/or the chain extender (component (c)), if necessary, the inert organic solvent and the additive(s)) other than such a component are continuously fed to the mixing head 6 for mixing, and the resulting mixture is allowed to flow down onto the skin layer.

The temperature of each of the components before mixing is usually adjusted to 20 to 60°C, preferably 30 to 50°C, more preferably 35 to 45°C. The temperature of the mixing head 6 is also usually adjusted to 20 to 60°C, preferably 30 to 50°C, more preferably 35 to 45°C. The temperature of each of the components before mixing and the temperature of the mixing head 6 are each 20°C or more and thus raw materials used, in particular, the polyester polycarbonate polyols tend to be decreased in viscosity and the flow rate tends to be stabilized. The temperature of each of the components before mixing and the temperature of the mixing head 6 are each 60°C or less and thus the curing rate of the curable composition tends to be properly controlled, the curable composition tends to be inhibited from being rapidly increased in viscosity, and synthetic leather having a uniform thickness tends to be obtained.

Thereafter, a sheet having a certain thickness is formed through the coating roll 8 and then allowed to pass through the drier 11 to perform curing, and drying of the inert organic solvent, thereby forming the adhesion layer 3 of the synthetic leather. Next, a base material 4 and the adhesion layer 3 are stacked and pressure bonded by a pressure bonding roll 9, and thereafter a sheet structure 7 is obtained and wound by a winding roll 10, to thereby obtain a desired synthetic leather laminate. The temperature of the drier 11 is usually set to 60 to 150°C, preferably 70 to 130°C, more preferably 80 to 120°C. The drying time is usually, 2 minutes to 15 minutes, preferably 3 minutes to 10 minutes, more preferably 4 minutes to 7 minutes.

While FIG. 2 illustrates a production example of synthetic leather including three layers of skin layer/adhesion layer/base material, a synthetic leather laminate including two layers of skin layer/base material, from which the adhesion layer is omitted, can also be produced by the same facilities. The adhesiveness of the skin layer and the base material is controlled by adjusting the curing state of the curable composition. Specifically, the synthetic leather laminate can be obtained by pressure bonding the curable composition, which is in the state of being not completely cured, with the base material. Thus, the curing temperature of the drier 11 is set to 60 to 150°C, preferably 70 to 130°C, more preferably 80 to 120°C. The drying time is usually set to 2 minutes to 15 minutes, preferably 3 minutes to 10 minutes, more preferably 4 minutes to 7 minutes.

<Application>

Synthetic leather obtained by using a polyurethane produced by using the present embodiment polyester polycarbonate polyol can be used in, for example, an interior material for automobiles, such as a seat for automobiles, furniture such as sofa, a clothing material, shoes, a bag, and other chandlery products. The synthetic leather is also used in, for example, an adhesive for laminate welding of various films, or a surface protection agent for such films.

Examples

Hereinafter, the present invention is further specifically described with reference to Examples and Comparative Examples, but the present invention is not limited to these Examples as long as it does not depart from the gist thereof. In the following Examples and Comparative Examples, methods for analyzing and evaluating physical properties and the like of each of the components are as follows.

[Analysis and evaluation of polyester polycarbonate polyol]

<Hydroxyl value of polyester polycarbonate polyol>

The hydroxyl value was measured according to JIS K1557-1.

<Compositional ratio (ratio of copolymerization) of polyester polycarbonate polyol>

A 100-mL eggplant flask was charged with 1 g of a polyester polycarbonate polyol sample, 30 g of methanol and 8 g of a 28% sodium methoxide solution in methanol, and the resultant was reacted at 100°C for 1 hour. After a reaction liquid was cooled to room temperature, 2 to 3 droplets of phenolphthalein as an indicator were added thereto, and the liquid was neutralized by hydrochloric acid. After cooling in a refrigerator for 1 hour and then filtration, analysis was made with gas chromatography (GC). In GC analysis, gas chromatography GC-14B (manufactured by Shimadzu Corporation in Japan) equipped with DB-WAX (manufactured by J&W in USA) as a column was used, diethylene glycol diethyl ester was used as an internal standard, a hydrogen flame ionization detector (FID) was used as a detector, and each of the components was quantitatively analyzed. The temperature rise profile of the column included retention at 60°C for 5 minutes and then a temperature rise to 250°C at 10°C/min.

The compositional ratio (ratio of copolymerization) of each polyester polycarbonate polyol was determined from each alcohol component and a dibasic acid-derived methyl ester component, detected by the above analysis results.

The compositional ratio of a polyester polycarbonate polyol containing a dibasic acid can be obtained by using a value from subtraction of the same molar number of diol as the molar number of a dibasic acid-derived methyl ester to thereby determine the molar number of diol constituting a carbonate backbone (in a case where a plurality of diols are used, calculation is made based on the ratio of such diols determined with gas chromatography under the assumption that the compositional ratio in diol in a carbonate backbone and the compositional ratio in diol in an ester backbone are the same).

<Measurement of melt viscosity>

After each polyester polycarbonate polyol was heated to 50°C in advance, the melt viscosity was measured at 50°C with an E-type viscometer (TVE-22HT manufactured by Toki Sangyo Co., Ltd., cone: No. 6).

<Carbonate group content of polyester polycarbonate polyol>

The carbonate group content is an amount of a carbonate group contained in one molecule of a polyester polycarbonate diol, and is specifically determined by the following expression (6).

$$\text{Carbonate group content (\%)} = (\text{Molecular weight of carbonate group}) \times (\text{Number of carbonate groups in one molecule}) / (\text{Number average molecular weight of polyester polycarbonate polyol}) \times 100 \quad (6)$$

wherein the molecular weight of a carbonate group (-O-C=O-O-) is 60.01.

The number of carbonate groups in one molecule was determined from the number (x) of repeating units in a carbonate structure by use of the following expression (8), based on a structure of the following formula (7):

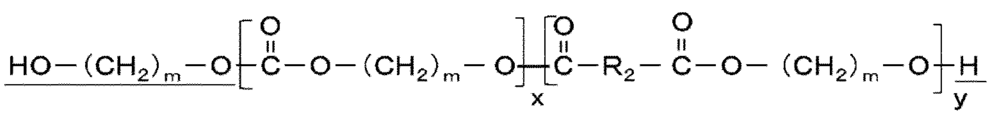 (7)

wherein m represents the average number of methylenes in diol, x represents the number of repeating units in a carbonate structure backbone in one molecule, y represents the number of repeating units in an ester structure backbone, and

each underlined portion represents a terminal group. $R_2$ represents a hydrocarbon derived from a dibasic acid used.

The structure of each segment constituting polycarbonate was determined from the compositional ratio of each polyester polycarbonate polyol determined from the <Compositional ratio (ratio of copolymerization) of polyester polycarbonate polyol>. Thus, the number of methylenes in each segment for constituting was determined, and the average number (m) of methylenes was determined from the ratio.

Number (x) of repeating units in carbonate group = [(Number average molecular weight (Mn) - (Molecular weight of ester backbone) - (Molecular weight of terminal group))/(Molecular weight of repeating unit of carbonate backbone) (8)

In the formula (8), the molecular weight of an ester backbone is determined from the compositional ratio of a carbonate backbone and the compositional ratio of an ester backbone, determined above with the gas chromatography. Specifically, the molecular weight of an ester backbone is the number obtained by multiplying the mass proportion obtained by conversion of the compositional ratio by mol of an ester backbone, determined separately with gas chromatography, into the compositional ratio by mass, with the molecular weight obtained by subtraction of the average molecular weight of a terminal diol group from the average molecular weight of each polyester polycarbonate polyol.

[Analysis and evaluation of polyurethane film]

<Production of polyurethane film>

Each of the components of the curable composition of the present invention, warmed to 40°C in advance, was added to a 200-mL separable four-necked flask equipped with a stirring blade (with four paddles inclined at 45 degrees) under a nitrogen atmosphere so that the amount of the curing composition was 80 g, and was stirred at 40°C for 5 minutes, and then the resultant was applied onto a polypropylene resin sheet (100 mm width, 1200 mm length, 1 mm thickness) in a size of 80 mm width, 100 mm length and 0.6 mm thickness by use of an applicator, and the resultant was dried on a hot plate at a surface temperature of 60°C for 2 hours and subsequently in an oven at 100°C for 12 hours. The resultant was further left to still stand under a constant-temperature and constant-humidity condition of 23°C and 55% RH for 12 hours or more, to thereby obtain a polyurethane film. The polyurethane film obtained was subjected to evaluation of various physical properties.

<Flexibility of polyurethane film>

The flexibility of the polyurethane film was evaluated by five examiners, and evaluated as touch in touching of the polyurethane film with their hands. The evaluation was performed according to the following criteria.

○ means flexibleness, the evaluation results of the five examiners being consistent.
△ means slight rigidity, the evaluation results of the five examiners being consistent.
× means rigidity, the evaluation results of the five examiners being consistent.

<Appearance of polyurethane film>

The surface appearance of the polyurethane film produced as described above was visually rated according to the following criteria.

○ means a smooth surface.
△ means a few streaks observed on the surface in the movement direction of the applicator.
× means many streaks observed on the surface in the movement direction of the applicator.

<Measurement of molecular weight>

The polyurethane film was partially cut out to prepare an N,N-dimethylacetamide solution so that the polyurethane concentration was 0.1% by mass, and the number average molecular weight (Mn) was measured in terms of standard polystyrene with a GPC apparatus [product name "HLC-8320" (columns: Tskgel Super HM-H × 4) manufactured by Tosoh Corporation, a solution of 2.6 g of lithium bromide dissolved in 1 L of dimethylacetamide was used as an eluent].

<Evaluation of oleic acid resistance>

A test piece of 3 cm × 3 cm was cut out from the polyurethane film. The weight of the test piece was measured by a precision balance, and thereafter the test piece was loaded into a glass bottle having a volume of 250 mL, into which 50 mL of oleic acid was placed as a test solvent, and was left to still stand in a constant-temperature bath at 80°C under a nitrogen atmosphere for 16 hours. After the test, the test piece was taken out and the front and back surfaces thereof were lightly wiped by a paper wiper, thereafter weight measurement was performed with a precision balance, and the rate of change in weight (rate of increase) from that before the test was calculated. A rate of change in weight, closer to 0%, means more favorable oleic acid resistance.

<Evaluation of ethanol resistance>

After a urethane film was produced by the same method as in <Evaluation of oleic acid resistance> described above, the urethane film was cut out to a test piece of 3 cm × 3 cm. The weight of the test piece was measured by a precision balance, and thereafter the test piece was loaded into a glass petri dish having an inner diameter of 10 cm, into which 50 mL of ethanol was placed as a test solvent, and immersed therein at a room temperature of about 23°C for 1 hour. After the test, the test piece was taken out and lightly wiped by a paper wiper, thereafter weight measurement was performed with a precision balance, and the rate of change in weight (rate of increase) from that before the test was calculated. A rate of change in weight, closer to 0%, means more favorable ethanol resistance.

<Measurement of glass transition temperature (Tg)>

A test piece of 10 mm width, 40 mm length and 0.4 mm thickness was cut out from the polyurethane film. A viscoelasticity measurement apparatus (manufactured by Hitachi High-Tech Science Corporation, [TA7000 series, DMA7100]) was used, the test piece was installed at a distance between chucks of 20 mm, and the viscoelasticity was measured at a rate of temperature rise of 5°C/min from -100°C to 100°C. The peak of tan6 was read out, and the glass transition temperature (Tg) was determined.

<Tensile test at room temperature>

A polyurethane test piece was prepared as a strip of 10 mm width, 100 mm length and about 0.5 mm thickness, according to JIS K6301 (2010), a tensile test was performed at a distance between chucks of 20 mm, at a tensile speed of 100 mm/min and at a temperature of 23°C (relative humidity 55%) with a tensile tester (product name "Tensilon, Model RTE-1210" manufactured by Orientec Co., Ltd.), and the stress at 100% elongation of the test piece, and the strength at break and the elongation at break were measured.

<Tensile test at low temperature>

A polyurethane test piece was prepared as a strip of 10 mm width, 100 mm length and about 0.5 mm thickness, according to JIS K6301 (2010), and a film was placed at a distance between chucks of 20 mm in a tensile tester (product name "Tensilon, Model RTE-1210" manufactured by Orientec Co., Ltd.) equipped with a constant-temperature bath ("Model TLF-R3T-E-W" manufactured by Orientec Co., Ltd.). Subsequently, a tensile test was performed at a tensile speed of 100 mm/min after still standing at -20°C for 5 minutes, and the stress at 100% elongation of the test piece was measured.

<Evaluation of heat resistance>

The polyurethane film was formed into a strip of 10 mm width, 100 mm length and about 50 μm thickness, and heated in a gear oven at a temperature of 120°C for 1000 hours. The breaking strength of the sample after heating was measured in the same manner as <Tensile test at room temperature>, and the percentage (%) of retention was determined.

<Evaluation of hydrolysis resistance>

The polyurethane film was formed into a strip of 10 mm width, 100 mm length and about 50 μm thickness, and heated in a constant-temperature and constant-humidity bath at a temperature of 70°C and at a relative humidity of 95% for 400 hours. The breaking strength of the sample after heating was measured in the same manner as

<Tensile test at room temperature>, and the percentage (%) of retention was determined.

[Analysis and evaluation of synthetic leather]

<Flexibility of synthetic leather>

The flexibility of synthetic leather was evaluated by five examiners, and evaluated as touch in touching of the synthetic leather with their hands. The evaluation was performed according to the following criteria.

○ means flexibleness, the evaluation results of the five examiners being consistent.
△ means slight rigidity, the evaluation results of the five examiners being consistent.
× means rigidity, the evaluation results of the five examiners being consistent.

<Wear resistance of synthetic leather>

A load of 9.8 N was applied to a friction block covered with a cotton cloth, to wear the surface of synthetic leather. The friction block was reciprocated for wearing within 140 mm on the surface of synthetic leather at a rate of 60 times/min for 10000 times. The synthetic leather after wearing was observed and rated according to the following criteria.

○ means no cleavage or breakage in a resin layer.
△ means any cleavage generated in a resin layer.
× means any breakage generated in a resin layer.

<Low temperature storage stability of synthetic leather>

Synthetic leather was wound on a paper tube having a diameter of 10 cm, and stored in a constant-temperature bath at a temperature of -20°C for one month. The synthetic leather was removed from the paper tube, left to still stand in a constant-temperature room at a temperature 23°C and at a humidity of 50% for one day, and the surface thereof was visually observed.

A case where there was no crack or wrinkle was rated as "○", a case where any fine crack and wrinkle each having a size of 1 mm or less were observed was rated as "△" and a case where any crack and any wrinkle each having a size of more than 1 mm were observed was rated as "×".

<Method for evaluating adhesiveness>

An incision was made on the interface between a polyester base fabric and a polyurethane resin layer of synthetic leather in advance, the urethane resin layer peeled and the base fabric were each secured by chucks, and the peel strength between the polyurethane layer and the base fabric was measured at a temperature of 23°C and at a speed of 200 mm/min with a tensile tester (Tensilon, Model RTE-1210 manufactured by Orientec Co., Ltd. was used) according to JIS K6854-2, and evaluated as adhesiveness.

[Example 1]

[Polymerization Example 1 of polyester polycarbonate polyol]

A 2-L glass flask equipped with a rectifier filled with a regular packing and a stirring apparatus was loaded with 221 g (2.51 mol) of ethylene carbonate, 148 g (1.64 mol) of 1,4-butanediol, 195 g (1.65 mol) of 1,6-hexanediol and 202 g (1.38 mol) of adipic acid. Thereto was added 0.10 g of titanium tetra-n-butoxide as a catalyst, and a reaction was performed for 12 hours while the reaction temperature was 150 to 170°C and the pressure was dropped from 10 kPa to 3 kPa, and a mixture of water, ethylene glycol and ethylene carbonate generated was distilled off.

Thereafter, switching to simple distillation was made, and a monomer was distilled out by a reaction at 170°C for 5 hours while the pressure was gradually reduced to 0.1 kPa. The results of analysis of the polyester polycarbonate

polyol obtained (also designated as PEC1) were shown in Table 1.

[Example 2]

[Polymerization Example 2 of polyester polycarbonate polyol]

Using the same apparatus as that of Polymerization Example 1 described above, the same polymerization as in Polymerization Example 1 was performed except that the amount of adipic acid loaded was 171 g (1.17 mol). The results of analysis of the polyester polycarbonate polyol obtained (also designated as PEC2) were shown in Table 1.

[Example 3]

[Polymerization Example 3 of polyester polycarbonate polyol]

Using the same apparatus as that of Polymerization Example 1 described above, the same polymerization as in Polymerization Example 1 was performed except that the amount of adipic acid loaded was 122 g (0.84 mol). The results of analysis of the polyester polycarbonate polyol obtained (also designated as PEC3) were shown in Table 1.

[Example 4]

[Polymerization Example 4 of polyester polycarbonate polyol]

Using the same apparatus as that of Polymerization Example 1 described above, the same polymerization as in Polymerization Example 1 was performed except that the amount of adipic acid loaded was 90 g (0.62 mol). The results of analysis of the polyester polycarbonate polyol obtained (also designated as PEC4) were shown in Table 1.

[Example 5]

[Polymerization Example 5 of polyester polycarbonate polyol]

Using the same apparatus as that of Polymerization Example 1 described above, the same polymerization as in Polymerization Example 1 was performed except that the amount of adipic acid loaded was 49 g (0.33 mol). The results of analysis of the polyester polycarbonate polyol obtained (also designated as PEC5) were shown in Table 1.

[Example 6]

[Polymerization Example 6 of polyester polycarbonate polyol]

Using the same apparatus as that of Polymerization Example 1 described above, the same polymerization as in Polymerization Example 1 was performed except that the amount of adipic acid loaded was 28 g (0.19 mol). The results of analysis of the polyester polycarbonate polyol obtained (also designated as PEC6) were shown in Table 1.

[Example 7]

[Polymerization Example 7 of polyester polycarbonate polyol]

Using the same apparatus as that of Polymerization Example 1 described above, the same polymerization as in Polymerization Example 1 was performed except that 221 g (2.51 mol) of ethylene carbonate, 171 g (1.64 mol) of 1,5-pentanediol, 195 g (1.65 mol) of 1,6-hexanediol and 122 g (0.84 mol) of adipic acid were loaded. The results of analysis of the polyester polycarbonate polyol obtained (also designated as PEC7) were shown in Table 1.

[Example 8]

[Polymerization Example 8 of polyester polycarbonate polyol]

Using the same apparatus as that of Polymerization Example 1 described above, the same polymerization as in Polymerization Example 1 was performed except that 221 g (2.51 mol) of ethylene carbonate, 171 g (1.64 mol) of 1,5-pentanediol, 195 g (1.65 mol) of 1,6-hexanediol and 90 g (0.62 mol) of adipic acid were loaded. The results of analysis

of the polyester polycarbonate polyol obtained (also designated as PEC8) were shown in Table 1.

[Example 9]

[Polymerization Example 9 of polyester polycarbonate polyol]

Using the same apparatus as that of Polymerization Example 1 described above, the same polymerization as in Polymerization Example 1 was performed except that 221 g (2.51 mol) of ethylene carbonate, 171 g (1.64 mol) of 1,5-pentanediol, 195 g (1.65 mol) of 1,6-hexanediol and 90 g (0.62 mol) of adipic acid were loaded. The results of analysis of the polyester polycarbonate polyol obtained (also designated as PEC9) were shown in Table 1.

[Example 10]

[Polymerization Example 10 of polyester polycarbonate polyol]

Using the same apparatus as that of Polymerization Example 1 described above, the same polymerization as in Polymerization Example 1 was performed except that 250 g (2.84 mol) of ethylene carbonate, 494 g (4.18 mol) of 1,6-hexanediol and 122 g (0.84 mol) of adipic acid were loaded. The results of analysis of the polyester polycarbonate polyol obtained (also designated as PEC10) were shown in Table 1.

[Example 11]

[Polymerization Example 11 of polyester polycarbonate polyol]

Using the same apparatus as that of Polymerization Example 1 described above, the same polymerization as in Polymerization Example 1 was performed except that 250 g (2.84 mol) of ethylene carbonate, 377 g (4.18 mol) of 1,4-butanediol and 122 g (0.84 mol) of adipic acid were loaded. The results of analysis of the polyester polycarbonate polyol obtained (also designated as PEC11) were shown in Table 1.

[Example 12]

[Polymerization Example 12 of polyester polycarbonate polyol]

The same polymerization as in Polymerization Example 3 was performed except that the polymerization time after switching to simple distillation was 4 hours. The results of analysis of the polycarbonate polyol obtained (also designated as PEC12) were shown in Table 1.

[Example 13]

[Polymerization Example 13 of polyester polycarbonate polyol]

The same polymerization as in Polymerization Example 3 was performed except that the polymerization time after switching to simple distillation was 3 hours. The results of analysis of the polycarbonate polyol obtained (also designated as PEC13) were shown in Table 1.

[Example 14]

[Polymerization Example 14 of polyester polycarbonate polyol]

The same polymerization as in Polymerization Example 3 was performed except that the polymerization time after switching to simple distillation was 7 hours. The results of analysis of the polycarbonate polyol obtained (also designated as PEC14) were shown in Table 1.

[Example 15]

[Polymerization Example 15 of polyester polycarbonate polyol]

The same polymerization as in Polymerization Example 3 was performed except that the polymerization time

after switching to simple distillation was 9 hours. The results of analysis of the polycarbonate polyol obtained (also designated as PEC15) were shown in Table 1.

[Example 16]

[Polymerization Example 16 of polyester polycarbonate polyol]

Using the same apparatus as that of Polymerization Example 1 described above, the same polymerization as in Polymerization Example 1 was performed except that 221 g (2.51 mol) of ethylene carbonate, 185 g (2.05 mol) of 1,4-butanediol, 195 g (1.65 mol) of 1,6-hexanediol and 122 g (0.84 mol) of adipic acid were loaded. The results of analysis of the polyester polycarbonate polyol obtained (also designated as PEC16) were shown in Table 1.

[Example 17]

[Polymerization Example 17 of polyester polycarbonate polyol]

Using the same apparatus as that of Polymerization Example 1 described above, the same polymerization as in Polymerization Example 1 was performed except that 221 g (2.51 mol) of ethylene carbonate, 92 g (1.02 mol) of 1,4-butanediol, 390 g (3.30 mol) of 1,6-hexanediol and 122 g (0.84 mol) of adipic acid were loaded. The results of analysis of the polyester polycarbonate polyol obtained (also designated as PEC17) were shown in Table 1.

[Example 18]

[Polymerization Example 18 of polyester polycarbonate polyol]

Using the same apparatus as that of Polymerization Example 1 described above, the same polymerization as in Polymerization Example 3 was performed except that terephthalic acid was used instead of adipic acid and the amount of terephthalic acid loaded was 140 g (0.84 mol). The results of analysis of the polyester polycarbonate polyol obtained (also designated as PEC18) were shown in Table 1.

[Comparative Example 1]

[Polymerization Example 19 of polyester polycarbonate polyol]

The same polymerization as in Polymerization Example 3 was performed except that the polymerization time after switching to simple distillation was 2 hours. The results of analysis of the polycarbonate polyol obtained (also designated as PEC19) were shown in Table 1.

[Comparative Example 2]

[Polymerization Example 20 of polyester polycarbonate polyol]

The same polymerization as in Polymerization Example 3 was performed except that the polymerization time after switching to simple distillation was 11 hours. The results of analysis of the polycarbonate polyol obtained (also designated as PEC20) were shown in Table 1.

[Comparative Example 3]

[Polymerization Example 21 of polyester polycarbonate polyol]

Using the same apparatus as that of Polymerization Example 1 described above, the same polymerization as in Polymerization Example 1 was performed except that the amount of adipic acid loaded was 280 g (1.92 mol). The results of analysis of the polyester polycarbonate polyol obtained (also designated as PEC21) were shown in Table 1.

[Comparative Example 4]

[Polymerization Example 22 of polyester polycarbonate polyol]

Using the same apparatus as that of Polymerization Example 1 described above, the same polymerization as in Polymerization Example 1 was performed except that the amount of adipic acid loaded was 20 g (0.14 mol). The results of analysis of the polyester polycarbonate polyol obtained (also designated as PEC22) were shown in Table 1.

[Comparative Example 5]

[Polymerization Example 23 of polyester polycarbonate polyol]

A 2-L glass flask equipped with a rectifier filled with a regular packing and a stirring apparatus was loaded with 221 g (2.51 mol) of ethylene carbonate, 148 g (1.64 mol) of 1,4-butanediol, 195 g (1.65 mol) of 1,6-hexanediol and 158 g (1.38 mol) of ε-caprolactone. Thereto was added 0.10 g of titanium tetrabutoxide as a catalyst, and a reaction was performed for 12 hours while the reaction temperature was 150 to 170°C and the pressure was dropped from 10 kPa to 3 kPa, and a mixture of water, ethylene glycol and ethylene carbonate generated was distilled off.

Thereafter, switching to simple distillation was made, and a monomer was distilled out by a reaction at 170°C for 5 hours while the pressure was gradually reduced to 0.1 kPa. The results of analysis of the polyester polycarbonate polyol obtained (also designated as PEC23) were shown in Table 1.

[Table 1]

| | Ratio of copolymerization (mol%) | | | | | | Hydroxyl value (mgKOH/g) | Average molecular weight (g/mol) | Carbonate group content (% by mass) | Appearance at 23°C | Melt viscosity at 50°C (mPa·s) | Polyester polycarbonate polyol obtained |
|---|---|---|---|---|---|---|---|---|---|---|---|---|
| | BDO-PC | PDO-PC | HDO-PC | ADA-Es | TPA-Es | CL | | | | | | |
| Example 1 | 28.1 | 0 | 25.0 | 46.9 | 0 | 0 | 56.3 | 1993 | 18.1 | Viscous liquid | 2520 | PEC1 |
| Example 2 | 29.1 | 0 | 31.3 | 39.6 | 0 | 0 | 55.4 | 2026 | 21.2 | Viscous liquid | 3050 | PEC2 |
| Example 3 | 35.4 | 0 | 36.2 | 28.4 | 0 | 0 | 56.7 | 1979 | 26.7 | Viscous liquid | 4230 | PEC3 |
| Example 4 | 38.5 | 0 | 40.5 | 21.0 | 0 | 0 | 54.6 | 2055 | 30.7 | Viscous liquid | 4620 | PEC4 |
| Example 5 | 44.6 | 0 | 44.1 | 11.3 | 0 | 0 | 55.8 | 2011 | 36.5 | Viscous liquid | 6800 | PEC5 |
| Example 6 | 47.3 | 0 | 46.3 | 6.4 | 0 | 0 | 56.8 | 1976 | 39.7 | Viscous liquid | 7560 | PEC6 |
| Example 7 | 0 | 33.8 | 33.4 | 32.8 | 0 | 0 | 54.1 | 2074 | 23.4 | Viscous liquid | 3310 | PEC7 |
| Example 8 | 0 | 38.6 | 40.3 | 21.1 | 0 | 0 | 53.9 | 2082 | 29.2 | Viscous liquid | 4650 | PEC8 |
| Example 9 | 0 | 44.3 | 43.9 | 11.8 | 0 | 0 | 56.5 | 1986 | 34.3 | Viscous liquid | 6420 | PEC9 |
| Example 10 | 0 | 0 | 73.3 | 26.7 | 0 | 0 | 53.9 | 2082 | 25.1 | Solid state | 4350 | PEC10 |
| Example 11 | 65.5 | 0 | 0 | 34.5 | 0 | 0 | 55.9 | 2008 | 26.1 | Wax state | 4560 | PEC11 |
| Example 12 | 35.7 | 0 | 36.5 | 27.8 | 0 | 0 | 63.8 | 1759 | 26.8 | Viscous liquid | 2310 | PEC12 |
| Example 13 | 36.1 | 0 | 35.2 | 28.7 | 0 | 0 | 74.5 | 1506 | 26.2 | Viscous liquid | 1620 | PEC13 |
| Example 14 | 37.3 | 0 | 34.6 | 28.1 | 0 | 0 | 45.6 | 2461 | 27.2 | Viscous liquid | 6850 | PEC14 |

(continued)

| | Ratio of copolymerization (mol%) | | | | | | Hydroxyl value (mgKOH/g) | Average molecular weight (g/mol) | Carbonate group content (% by mass) | Appearance at 23°C | Melt viscosity at 50°C (mPa·s) | Polyester polycarbonate polyol obtained |
|---|---|---|---|---|---|---|---|---|---|---|---|---|
| | BDO-PC | PDO-PC | HDO-PC | ADA-Es | TPA-Es | CL | | | | | | |
| Example 15 | 36.2 | 0 | 37.3 | 26.5 | 0 | 0 | 38.1 | 2945 | 28.1 | Viscous liquid | 8190 | PEC15 |
| Example 16 | 43.6 | 0 | 23.2 | 33.2 | 0 | 0 | 56.9 | 1972 | 25.0 | Viscous liquid | 3880 | PEC16 |
| Example 17 | 21.3 | 0 | 52.6 | 26.1 | 0 | 0 | 55.5 | 2022 | 26.8 | Viscous liquid | 3840 | PEC17 |
| Example 18 | 35.6 | 0 | 36.2 | 0.0 | 28.2 | 0 | 55.2 | 2033 | 25.8 | Viscous liquid | 4270 | PEC18 |
| Comparative Example 1 | 35.6 | 0 | 36.8 | 27.6 | 0 | 0 | 105.3 | 1066 | 26.0 | Viscous liquid | 1320 | PEC19 |
| Comparative Example 2 | 36.2 | 0 | 37.3 | 26.5 | 0 | 0 | 36.4 | 3083 | 28.1 | Viscous liquid | 8710 | PEC20 |
| Comparative Example 3 | 17.9 | 0 | 17.6 | 64.5 | 0 | 0 | 53.8 | 2086 | 11.1 | Viscous liquid | 1623 | PEC21 |
| Comparative Example 4 | 48.3 | 0 | 47.2 | 4.5 | 0 | 0 | 55.1 | 2037 | 41.0 | Viscous liquid | 10600 | PEC22 |
| Comparative Example 5 | 29.5 | 0 | 29.1 | 0.0 | 0 | 41.4 | 56.9 | 1972 | 26.0 | Viscous liquid | 4140 | PEC23 |

BDO-PC: 1,4-Butanediol-derived carbonate structure
PDO-PC: 1,5-Pentanediol-derived carbonate structure
HDO-PC: 1,6-Hexanediol-derived carbonate structure
ADA-Es: Adipic acid-derived ester structure
TPA-Es: Terephthalic acid-derived ester structure
CL: ε-Caprolactone-derived ester structure

[Example 19]

A 500-mL separable flask with a stirring blade, sealed with nitrogen gas, was loaded with 15.34 g (0.06 mol) of diphenylmethane-4,4'-diisocyanate (MDI, average number of isocyanate groups in one molecule: 2.0) and 80 g of N,N-dimethylformamide (DMF), and the resultant was warmed to 40°C to thereby obtain a solution. 60 g of N,N-dimethylformamide (DMF), and 40.0 g (0.02 mol) of polyester polycarbonate polyol PEC1 to which 0.0028 g of dibutyltin dilaurate as a catalyst was added, were dropped to the flask under stirring of the solution over 30 minutes. The reaction was made at 60°C under stirring for 2 hours, to obtain a prepolymer with isocyanate at a terminal. Next, 3.6 g (0.04 mol) of 1,4-butanediol as a chain extender was added to perform a reaction at 60°C for 1 hour, and thereafter 0.5 g of ethanol as a reaction terminator was added to thereby obtain a polyurethane solution in DMF (solid content: about 30% by mass). A glass plate was coated with the polyurethane solution in N,N-dimethylformamide (DMF) obtained, and the resultant was heated at 80°C for 2 hours to thereby form a polyurethane film having a thickness of 50 μm. The polyurethane film was left to still stand at room temperature for 24 hours, and thereafter subjected to evaluation of various physical properties. The evaluation results were shown in Table 2.

[Examples 20 to 36]

Each polyurethane film was obtained in the same manner as in Example 1 except that PEC2 to PEC18 were each used as the polyester polycarbonate polyol and the mass of the polyester polycarbonate used was the mass described in Table 2, and was subjected to evaluation of various physical properties. The evaluation results were shown in Table 2.

[Comparative Examples 6 to 10]

Each polyurethane film was obtained in the same manner as in Example 1 except that PEC19 to PEC23 were each used as the polyester polycarbonate polyol and the mass of the polyester polycarbonate used was the mass described in Table 1, and was subjected to evaluation of various physical properties. The evaluation results were shown in Table 2.

[0124] [Table 2]

| | Example 19 | Example 20 | Example 21 | Example 22 | Example 23 | Example 24 | Example 25 | Example 26 | Example 27 | Example 28 | Example 29 | Example 30 | Example 31 | Example 32 | Example 33 | Example 34 | Example 35 | Example 36 | Comparative Example 6 | Comparative Example 7 | Comparative Example 8 | Comparative Example 9 | Comparative Example 10 |
|---|---|---|---|---|---|---|---|---|---|---|---|---|---|---|---|---|---|---|---|---|---|---|---|
| Polyester polycarbonate polyol | PEC1 | PEC2 | PEC3 | PEC4 | PEC5 | PEC6 | PEC7 | PEC8 | PEC9 | PEC10 | PEC11 | PEC12 | PEC13 | PEC14 | PEC15 | PEC16 | PEC17 | PEC18 | PEC19 | PEC20 | PEC21 | PEC22 | PEC23 |
| Mass of polyester polycarbonate polyol (g) | 40.0 | 40.0 | 40.0 | 40.0 | 40.0 | 40.0 | 40.0 | 40.0 | 40.0 | 40.0 | 40.0 | 35.2 | 30.1 | 49.2 | 58.9 | 40.0 | 40.0 | 40.0 | 21.3 | 61.7 | 40.0 | 40.0 | 40.0 |
| Organic polyisocyanate compound | MDI | MDI | MDI | MDI | MDI | MDI | MDI | MDI | MDI | MDI | MDI | MDI | MDI | MDI | MDI | MDI | MDI | MDI | MDI | MDI | MDI | MDI | MDI |
| Chain extender | BDO | BDO | BDO | BDO | BDO | BDO | BDO | BDO | BDO | BDO | BDO | BDO | BDO | BDO | BDO | BDO | BDO | BDO | BDO | BDO | BDO | BDO | BDO |
| Number average molecular weight (Mn) of polyurethane | 63000 | 58000 | 72000 | 65000 | 58000 | 65000 | 52000 | 65000 | 58000 | 65000 | 52000 | 65000 | 58000 | 65000 | 52000 | 65000 | 67000 | 67000 | 50000 | 69000 | 67000 | 59000 | 64000 |
| <Tensile properties> | | | | | | | | | | | | | | | | | | | | | | | |
| Strength at break (MPa) | 53.0 | 58.6 | 65.1 | 69.3 | 72.3 | 75.6 | 61.5 | 65.9 | 70.2 | 78.6 | 73.9 | 69.9 | 73.9 | 61.3 | 58.3 | 68.9 | 62.6 | 75.9 | 78.6 | 55.3 | 48.3 | 78.6 | 51.2 |
| Elongation at break (%) | 750 | 730 | 680 | 630 | 600 | 580 | 700 | 650 | 630 | 540 | 560 | 630 | 600 | 780 | 830 | 660 | 700 | 500 | 460 | 880 | 750 | 540 | 680 |
| Modulus at 100% (MPa) | 3.6 | 4.1 | 4.5 | 4.9 | 5.3 | 6.9 | 4.1 | 4.5 | 4.8 | 8.8 | 7.6 | 6.3 | 6.9 | 4.0 | 3.6 | 4.7 | 4.2 | 9.3 | 11.6 | 3.1 | 3.1 | 10.6 | 4.2 |
| <Tensile properties at low temperature (-20°C)> | | | | | | | | | | | | | | | | | | | | | | | |
| Strength at break (MPa) | 65.0 | 69.5 | 71.5 | 75.6 | 78.9 | 80.5 | 68.3 | 71.3 | 75.3 | 85.6 | 82.6 | 72.3 | 74.6 | 70.3 | 69.3 | 73.6 | 69.3 | 88.9 | 86.3 | 65.3 | 56.3 | 81.3 | 60.3 |
| Elongation at break (%) | 680 | 650 | 620 | 600 | 570 | 550 | 650 | 640 | 590 | 510 | 530 | 580 | 530 | 650 | 680 | 610 | 650 | 490 | 480 | 700 | 700 | 500 | 610 |
| Modulus at 100% (MPa) | 24.8 | 29.3 | 32.3 | 35.9 | 38.1 | 42.9 | 30.2 | 32.2 | 35.2 | 50.3 | 46.9 | 34.9 | 37.9 | 25.6 | 21.2 | 34.6 | 30.6 | 48.1 | 52.9 | 20.1 | 22.1 | 48.9 | 30.6 |
| Tg (°C) of polyurethane | -35 | -32 | -30 | -28 | -25 | -21 | -33 | -30 | -25 | -19 | -20 | -26 | -23 | -33 | -35 | -27 | -32 | -15 | -11 | -33 | -32 | -18 | -25 |
| Oleic acid resistance (%) Rate of change in mass (%) | 20.9 | 17.3 | 14.5 | 12.1 | 8.9 | 8.1 | 18.5 | 16.8 | 10.2 | 21.6 | 15.9 | 13.6 | 12.5 | 18.9 | 21.3 | 12.6 | 16.3 | 11.3 | 11.3 | 25.9 | 29.8 | 7.5 | 26.3 |
| Ethanol resistance Rate of change in mass (%) | 25 | 21 | 18 | 13 | 11 | 9 | 20 | 15 | 13 | 19 | 15 | 15 | 14 | 24 | 28 | 15 | 20 | 8 | 30 | 33 | 35 | 11 | 30 |
| Heat resistance Percentage of retention of breaking strength (%) | 85 | 90 | 95 | 96 | 98 | 98 | 95 | 95 | 96 | 94 | 93 | 93 | 95 | 96 | 93 | 94 | 95 | 98 | 90 | 88 | 75 | 96 | 87 |
| Hydrolysis resistance Percentage of retention of breaking strength (%) | 94 | 92 | 88 | 87 | 88 | 87 | 89 | 90 | 90 | 83 | 86 | 87 | 84 | 88 | 91 | 87 | 76 | 96 | 66 | 75 | 73 | 76 | 76 |
| Flexibility of polyurethane film | ○ | ○ | ○ | ○ | ○ | ○ | ○ | ○ | ○ | ○ | ○ | ○ | ○ | ○ | ○ | ○ | ○ | △ | × | ○ | ○ | × | ○ |
| Appearance of polyurethane film | ○ | ○ | ○ | ○ | ○ | ○ | ○ | ○ | ○ | ○ | ○ | ○ | ○ | ○ | ○ | ○ | ○ | ○ | ○ | △ | ○ | △ | ○ |

MDI: Diphenylmethane-4,4'-diisocyanate

BDO: 1,4-Butanediol

[Example 37]

A 500-mL separable flask with a stirring blade, sealed with nitrogen gas, was loaded with 15.74 g (0.06 mol) of 4,4'-methylenebiscyclohexyl diisocyanate (hydrogenated MDI, average number of isocyanate groups in one molecule: 2.0) and 80 g of N,N-dimethylformamide (DMF), and the resultant was warmed to 50°C to thereby obtain a solution. 60 g of N,N-dimethylformamide (DMF), and 40 g (0.02 mol) of polyester polycarbonate polyol PEC2 to which 0.0028 g of dibutyltin dilaurate as a catalyst was added, were dropped to the flask under stirring of the solution over 30 minutes. The reaction was made at 70°C under stirring for 2 hours, to obtain a prepolymer with isocyanate at a terminal. Next, 6.8 g (0.04 mol) of isophoronediamine as a chain extender was added to perform a reaction at 70°C for 2 hours, and thereafter 0.5 g of ethanol as a reaction terminator was added to thereby obtain a polyurethane solution in DMF (solid content: about 30% by mass). A glass plate was coated with the polyurethane solution in N,N-dimethylformamide (DMF) obtained, and the resultant was heated at 80°C for 2 hours to thereby form a polyurethane film having a thickness of 50 μm. The polyurethane film was left to still stand at room temperature for 24 hours, and thereafter subjected to evaluation of various physical properties. The evaluation results were shown in Table 3.

[Examples 38 to 46]

Each polyurethane film was obtained in the same manner as in Example 37 except that PEC3, 4, 5, 8, 10, 11, 13, 14 and 18 were each used as the polyester polycarbonate polyol, and was subjected to evaluation of various physical properties. The evaluation results were shown in Table 3.

[Comparative Examples 11 to 15]

Each polyurethane film was obtained in the same manner as in Example 1 except that PC19 to PC23 were each used as the polyester polycarbonate polyol, and was subjected to evaluation of various physical properties. The evaluation results were shown in Table 3. - 68 -

[Table 3]

| | Example 37 | Example 38 | Example 39 | Example 40 | Example 41 | Example 42 | Example 43 | Example 44 | Example 45 | Example 46 | Comparative Example 11 | Comparative Example 12 | Comparative Example 13 | Comparative Example 14 | Comparative Example 15 |
|---|---|---|---|---|---|---|---|---|---|---|---|---|---|---|---|
| Polyester polycarbonate polyol | PEC2 | PEC3 | PEC4 | PEC5 | PEC8 | PEC10 | PEC11 | PEC13 | PEC14 | PEC18 | PEC19 | PEC20 | PEC21 | PEC22 | PEC23 |
| Mass of polyester polycarbonate polyol (g) | 400 | 400 | 40.0 | 40.0 | 40.0 | 40.0 | 400 | 30.1 | 49.2 | 40.0 | 21.3 | 61.7 | 400 | 400 | 400 |
| Organic polyisocyanate compound | Hydrogenated MDI | Hydrogenated MDI | Hydrogenated MDI | Hydrogenated MDI | Hydrogenated MDI | Hydrogenated MDI | Hydrogenated MDI | Hydrogenated MDI | Hydrogenated MDI | Hydrogenated MDI | Hydrogenated MDI | Hydrogenated MDI | Hydrogenated MDI | Hydrogenated MDI | Hydrogenated MDI |
| Chain extender | IPDA | IPDA | IPDA | IPDA | IPDA | IPDA | IPDA | IPDA | IPDA | IPDA | IPDA | IPDA | IPDA | IPDA | IPDA |
| Number average molecular weight (Mn) of polyurethane | 58000 | 72000 | 65000 | 58000 | 65000 | 65000 | 52000 | 58000 | 65000 | 67000 | 50000 | 69000 | 67000 | 59000 | 64000 |
| <Tensile properties> Strength at break (MPa) | 63.2 | 69.8 | 73.6 | 76.5 | 68.3 | 82.6 | 85.6 | 78.2 | 62.1 | 79.6 | 72.9 | 55.9 | 48.3 | 72.6 | 55.3 |
| Elongation at break (%) | 680 | 640 | 610 | 570 | 650 | 520 | 520 | 500 | 730 | 480 | 400 | 820 | 610 | 520 | 610 |

(continued)

| | Example 37 | Example 38 | Example 39 | Example 40 | Example 41 | Example 42 | Example 43 | Example 44 | Example 45 | Example 46 | Comparative Example 11 | Comparative Example 12 | Comparative Example 13 | Comparative Example 14 | Comparative Example 15 |
|---|---|---|---|---|---|---|---|---|---|---|---|---|---|---|---|
| Modulus at 100% (MPa) | 4.4 | 4.9 | 5.2 | 5.6 | 4.8 | 9.9 | 8.9 | 10.6 | 4.0 | 13.9 | 15.9 | 3.9 | 3.6 | 19.6 | 50 |
| <Tensile properties at low temperature (-20°C)> | | | | | | | | | | | | | | | |
| Strength at break (MPa) | 32.6 | 35.9 | 38.8 | 42.9 | 35.2 | 46.9 | 42.6 | 45.9 | 31.9 | 48.9 | 45.9 | 25.6 | 30.9 | 24.6 | 29.6 |
| Elongation at break (%) | 630 | 610 | 580 | 590 | 600 | 510 | 530 | 480 | 680 | 410 | 390 | 690 | 380 | 390 | 490 |
| Modulus at 100% (MPa) | 8.6 | 9.5 | 10.9 | 12.9 | 8.6 | 15.6 | 13.6 | 17.9 | 7.2 | 20.9 | 25.9 | 6.1 | 8.9 | 28.6 | 13.6 |
| Tg (°C) of polyurethane | -22 | -20 | -18 | -16 | -20 | -10 | -12 | -12 | -25 | -8 | -5 | -26 | -20 | -3 | -10 |
| Oleic acid resistance Rate of change in mass (%) | 17.3 | 14.5 | 12.1 | 8.9 | 16.8 | 21.6 | 15.9 | 12.5 | 18.9 | 11.3 | 11.3 | 25.9 | 29.8 | 7.5 | 26.3 |
| Ethanol resistance Rate of change in mass (%) | 16 | 12 | 8 | 7 | 10 | 15 | 9 | 8 | 18 | 5 | 23 | 26 | 30 | 10 | 26 |

(continued)

| | Example 37 | Example 38 | Example 39 | Example 40 | Example 41 | Example 42 | Example 43 | Example 44 | Example 45 | Example 46 | Comparative Example 11 | Comparative Example 12 | Comparative Example 13 | Comparative Example 14 | Comparative Example 15 |
|---|---|---|---|---|---|---|---|---|---|---|---|---|---|---|---|
| Heat resistance Percentage of retention of breaking strength (%) | 91 | 96 | 97 | 98 | 96 | 96 | 95 | 96 | 96 | 97 | 89 | 88 | 76 | 90 | 87 |
| Hydrolysis resistance Percentage of retention of breaking strength (%) | 91 | 89 | 90 | 89 | 92 | 85 | 87 | 88 | 90 | 96 | 70 | 78 | 74 | 76 | 78 |
| Flexibility of polyurethane film | ○ | ○ | ○ | ○ | ○ | ○ | ○ | ○ | ○ | △ | × | ○ | ○ | × | ○ |
| Appearance of polyurethane film | ○ | ○ | ○ | ○ | ○ | ○ | ○ | ○ | ○ | ○ | ○ | △ | ○ | △ | ○ |

Hydrogenated MDI: 4,4'-Methylenebiscyclohexyl diisocyanate
IPDA: Isophoronediamine

[Example 47]

The same apparatus as the apparatus illustrated in FIG. 2 was used, release paper (manufactured by LINTEC Corporation, R-8) having an embossed pattern was used, and a composition having the same compositional ratio as in Example 38 (two components, a prepolymer obtained by a reaction of isocyanate and the polyester polycarbonate polyol, and a chain extender, were continuously mixed by a mixing head at a temperature of 70°C at the last time) was allowed to continuously flow down on the release paper, and adjusted by a coating roll so that the thickness was 50 μm. The resultant was allowed to pass through a drier at 120°C, to form a urethane layer serving as a skin layer.

Next, a composition having the same compositional ratio as in Example 21 (two components, a prepolymer obtained by a reaction of isocyanate and the polyester polycarbonate polyol, and a chain extender, were continuously mixed by a mixing head at a temperature of 70°C at the last time) were continuously mixed by a mixing head at a temperature of 40°C, allowed to continuously flow down on the release paper, and adjusted by a coating roll so that the thickness was 250 μm. The resultant was allowed to pass through a drier at 120°C, to form a urethane layer serving as an adhesion layer.

Next, synthetic leather including a polyurethane laminate was obtained by laminating a base fabric (non-woven fabric including a polyester fiber) having a thickness of 500 μm by a pressure bonding roll, and winding the resultant by a winding roll. The synthetic leather obtained was evaluated and the results were shown in Table 4.

[Examples 48 to 54]

Each synthetic leather including a polyurethane laminate was obtained in the same manner as in Example 47 except that each composition having the same compositional ratio as in Examples shown in Table 4 was used for formation of polyurethane as a skin layer and polyurethane as an adhesion layer. The synthetic leather obtained was evaluated and the results were shown in Table 4.

[Comparative Examples 15 to 19]

Each synthetic leather including a polyurethane laminate was obtained in the same manner as in Example 47 except that each composition having the same compositional ratio as in Comparative Examples shown in Table 4 was used for formation of polyurethane as a skin layer and polyurethane as an adhesion layer. The synthetic leather obtained was evaluated and the results were shown in Table 4.

[Table 4]

| Synthetic leather | Example 47 | Example 48 | Example 49 | Example 50 | Example 51 | Example 52 | Example 53 | Example 54 | Comparative Example 15 | Comparative Example 16 | Comparative Example 17 | Comparative Example 18 | Comparative Example 19 |
|---|---|---|---|---|---|---|---|---|---|---|---|---|---|
| Compositional ratio of polyurethane for skin layer | Example 38 | Example 39 | Example 41 | Example 42 | Example 43 | Example 44 | Example 45 | Example 46 | Comparative Example 11 | Comparative Example 12 | Comparative Example 13 | Comparative Example 14 | Comparative Example 15 |
| Compositional ratio of polyurethane for adhesion layer | Example 21 | Example 22 | Example 26 | Example 28 | Example 29 | Example 31 | Example 32 | Example 21 | Comparative Example 6 | Comparative Example 7 | Comparative Example 8 | Comparative Example 9 | Comparative Example 10 |
| Flexibility of synthetic leather | ○ | ○ | ○ | ○ | ○ | ○ | ○ | △ | × | ○ | ○ | × | ○ |
| Wear resistance | ○ | ○ | ○ | ○ | ○ | ○ | ○ | ○ | △ | × | △ | ○ | △ |
| Low temperature storage stability | ○ | ○ | ○ | ○ | ○ | ○ | ○ | ○ | × | ○ | ○ | △ | △ |
| Peel strength between polyurethane layer and base fabric (N/25 mm) | 1.7 | 1.8 | 1.6 | 1.2 | 1.3 | 1.5 | 1.5 | 1.7 | 0.9 | 0.8 | 1.1 | 0.5 | 1.1 |

[Example 55]

[Polymerization Example 24 of polyester polycarbonate polyol]

A polyester polycarbonate polyol was synthesized in the same manner as in Example 3 except that 0.11 g of zirconium tetra-n-butoxide as a catalyst was added instead of titanium tetra-n-butoxide. The polyester polycarbonate polyol obtained had a viscous liquid appearance, had a hydroxyl value of 55.2 mgKOH/g, had a ratio of copolymerization of 35.6% by mol of a 1,4-butanediol-derived carbonate structure, 35.9% by mol of a 1,6-hexanediol-derived carbonate structure and 28.5% by mol of an adipic acid-derived ester structure, and had a carbonate group content of 26.6% by mass.

[Example 56]

[Polymerization Example 25 of polyester polycarbonate polyol]

A 2-L glass flask equipped with a rectifier filled with a regular packing and a stirring apparatus was loaded with 221 g (2.51 mol) of ethylene carbonate, 148 g (1.64 mol) of 1,4-butanediol, 195 g (1.65 mol) of 1,6-hexanediol and 122 g (0.84 mol) of adipic acid. Thereto was added 0.50 g of magnesium di-n-butoxide as a catalyst, and a reaction was performed for 24 hours while the reaction temperature was 150 to 170°C and the pressure was dropped from 10 kPa to 3 kPa, and a mixture of water, ethylene glycol and ethylene carbonate generated was distilled off.

Thereafter, switching to simple distillation was made, and a monomer was distilled out by a reaction at 170°C for 20 hours while the pressure was gradually reduced to 0.1 kPa.

The polyester polycarbonate polyol obtained had a viscous liquid appearance, had a hydroxyl value of 59.2 mgKOH/g, had a ratio of copolymerization of 36.6% by mol of a 1,4-butanediol-derived carbonate structure, 34.1% by mol of a 1,6-hexanediol-derived carbonate structure and 29.3% by mol of an adipic acid-derived ester structure, and had a carbonate group content of 26.3% by mass.

[Comparative Example 20]

[Polymerization Example 26 of polyester polycarbonate polyol]

A polyester polycarbonate polyol was synthesized in the same manner as in Example 3 except that 0.06 g of magnesium acetate-tetrahydrate as a catalyst was added instead of titanium tetra-n-butoxide. A reaction was performed at a reaction temperature of 150 to 170°C and at a pressure of 3 kPa, but was terminated because of no generation of any distilled product and no progress of the reaction.

Industrial Applicability

A polyurethane using the polyester polycarbonate polyol of the present invention has excellent balance of flexibility, chemical resistance, low-temperature characteristics, heat resistance, adhesiveness, wear resistance and texture, and thus can be suitably used particularly for synthetic leather.

The polyester polycarbonate polyol of the present embodiment is also used in an adhesive for laminate welding of various films, a surface protection agent for such films, and the like.

Reference Signs List

1 release paper
2 skin layer
3 adhesion layer
4 base material (non-woven fabric)
5 mixing head (skin layer)
6 mixing head (adhesion layer)
7 sheet structure (dry synthetic leather product)
8 coating roll
9 pressure bonding roll
10 winding roll
11 drier

## Claims

1. A polyester polycarbonate polyol comprising a repeating unit represented by the following formula (1) and a repeating unit represented by the following formula (2), and comprising a hydroxyl group at a molecular terminal, the polyester polycarbonate polyol having a hydroxyl value of 37 to 86 mgKOH/g and a carbonate group content of 15 to 40% by mass:

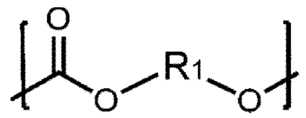

(1)

wherein $R_1$ is a divalent linear aliphatic or alicyclic hydrocarbon having 2 to 15 carbon atoms;

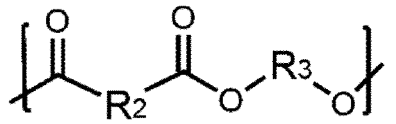

(2)

wherein $R_2$ is a divalent hydrocarbon having 2 to 15 carbon atoms and $R_3$ is a divalent linear aliphatic or alicyclic hydrocarbon having 2 to 15 carbon atoms.

2. The polyester polycarbonate polyol according to claim 1, wherein a molar ratio between a structural unit represented by the formula (1) and a structural unit represented by the formula (2) is 50/50 to 95/5.

3. The polyester polycarbonate polyol according to claim 1 or 2, wherein 50% by mol or more of the repeating unit represented by the formula (1) comprises at least two repeating units selected from the group consisting of formula (3), formula (4), and formula (5).

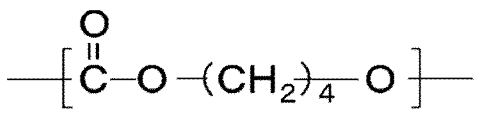

(3)

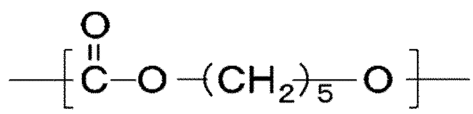

(4)

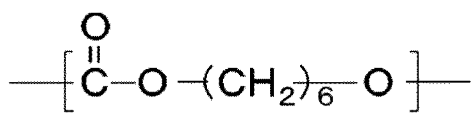

(5)

4. The polyester polycarbonate polyol according to claim 3, wherein 50% by mol or more of the repeating unit represented by the formula (1) comprises repeating units of formula (4) and formula (5).

5. The polyester polycarbonate polyol according to claim 3, wherein 50% by mol or more of the repeating unit represented by the formula (1) comprises repeating units of formula (3) and formula (5), and the carbonate group content is 21 to 40% by mass.

6. Synthetic leather produced by using the polyester polycarbonate polyol according to any one of claims 1 to 5.

7. A method for producing the polyester polycarbonate polyol according to claim 1 or 2, comprising using a metal alkoxide as a catalyst.

8. The method for producing the polyester polycarbonate polyol according to claim 7, wherein the metal alkoxide is an alkoxide of a metal of Group 4 in the periodic table.

**Patentansprüche**

1. Polyesterpolycarbonatpolyol, umfassend eine sich wiederholende Einheit der folgenden Formel (1) und eine sich wiederholende Einheit der folgenden Formel (2), und umfassend eine Hydroxylgruppe an einem Molekülende, wobei das Polyesterpolycarbonatpolyol eine Hydroxylzahl von 37 bis 86 mgKOH/g und einen Carbonatgruppengehalt von 15 bis 40 Massen-% aufweist:

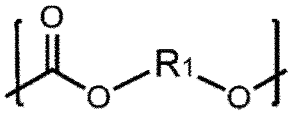
(1)

wobei $R_1$ ein zweibindiger linearer aliphatischer oder alicyclischer Kohlenwasserstoff mit 2 bis 15 Kohlenstoffatomen ist;

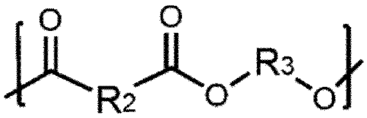
(2)

wobei $R_2$ ein zweibindiger Kohlenwasserstoff mit 2 bis 15 Kohlenstoffatomen ist und $R_3$ ein zweibindiger linearer aliphatischer oder alicyclischer Kohlenwasserstoff mit 2 bis 15 Kohlenstoffatomen ist.

2. Polyesterpolycarbonatpolyol nach Anspruch 1, wobei das Molverhältnis zwischen einer durch die Formel (1) dargestellten Struktureinheit und einer durch die Formel (2) dargestellten Struktureinheit 50/50 bis 95/5 beträgt.

3. Polyesterpolycarbonatpolyol nach Anspruch 1 oder 2, wobei 50 Mol-% oder mehr der sich wiederholenden Einheit der Formel (1) mindestens zwei sich wiederholende Einheiten, ausgewählt aus der Gruppe bestehend aus Formel (3), Formel (4) und Formel (5), umfasst:

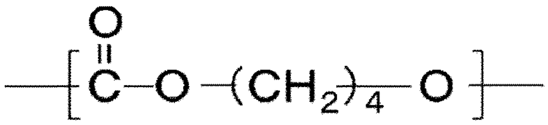
(3)

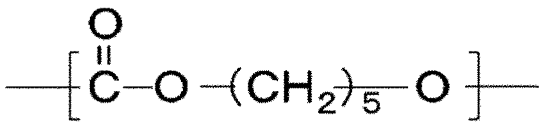
(4)

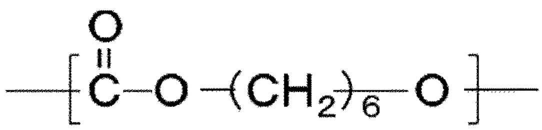
(5)

4. Polyesterpolycarbonatpolyol nach Anspruch 3, wobei 50 Mol-% oder mehr der sich wiederholenden Einheit der Formel (1) Wiederholungseinheiten der Formel (4) und der Formel (5) umfasst.

5. Polyesterpolycarbonatpolyol nach Anspruch 3, wobei 50 Mol-% oder mehr sich wiederholenden Einheit der Formel (1) Wiederholungseinheiten der Formel (3) und der Formel (5) umfasst und der Carbonatgruppengehalt 21 bis 40 Massen-% ist.

6. Kunstleder, hergestellt unter Verwendung des Polyesterpolycarbonatpolyols nach einem der Ansprüche 1 bis 5.

7. Verfahren zur Herstellung des Polyesterpolycarbonatpolyols nach Anspruch 1 oder 2, umfassend die Verwendung eines Metallalkoxids als Katalysator.

**8.** Verfahren zur Herstellung des Polyesterpolycarbonatpolyols nach Anspruch 7, wobei das Metallalkoxid ein Alkoxid eines Metalls der Gruppe 4 des Periodensystems ist.

## Revendications

**1.** Polyester polycarbonate polyol comprenant un motif répétitif représenté par la formule (1) suivante et un motif répétitif représenté par la formule (2) suivante, et comprenant un groupe hydroxyle au niveau d'une terminaison moléculaire, le polyester polycarbonate polyol ayant un indice hydroxyle de 37 à 86 mgKOH/g et une teneur en groupes carbonate de 15 à 40 % en masse :

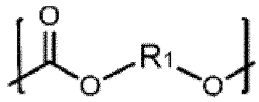

(1)

dans lequel $R_1$ est un hydrocarbure divalent linéaire, aliphatique ou alicyclique, comportant 2 à 15 atomes de carbone ;

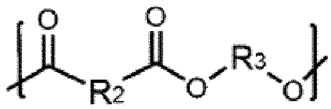

(2)

dans lequel $R_2$ est un hydrocarbure divalent comportant 2 à 15 atomes de carbone et $R_3$ est un hydrocarbure divalent linéaire, aliphatique ou alicyclique, comportant 2 à 15 atomes de carbone.

**2.** Polyester polycarbonate polyol selon la revendication 1, dans lequel un rapport molaire entre un motif structural représenté par la formule (1) et un motif structural représenté par la formule (2) est de 50/50 à 95/5.

**3.** Polyester polycarbonate polyol selon la revendication 1 ou 2, dans lequel 50 % en moles ou plus du motif répétitif représenté par la formule (1) comprend au moins deux motifs répétitifs choisis dans le groupe constitué de la formule (3), de la formule (4) et de la formule (5).

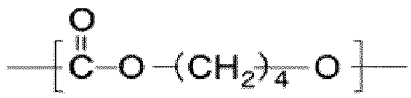

(3)

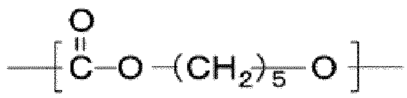

(4)

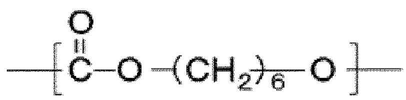

(5)

**4.** Polyester polycarbonate polyol selon la revendication 3, dans lequel 50 % en moles ou plus du motif répétitif représenté par la formule (1) comprend des motifs répétitifs de formule (4) et de formule (5).

**5.** Polyester polycarbonate polyol selon la revendication 3, dans lequel 50 % en moles ou plus du motif répétitif représenté par la formule (1) comprend des motifs répétitifs de formule (3) et de formule (5), et la teneur en groupes carbonate est de 21 à 40 % en masse.

**6.** Cuir synthétique produit en utilisant le polyester polycarbonate polyol selon l'une quelconque des revendications 1 à 5.

7. Procédé de production du polyester polycarbonate polyol selon la revendication 1 ou 2, comprenant l'utilisation d'un alcoxyde de métal en tant que catalyseur.

8. Procédé de production du polyester polycarbonate polyol selon la revendication 7, dans lequel l'alcoxyde de métal est un alcoxyde d'un métal du Groupe 4 dans le tableau périodique.

FIG. 1

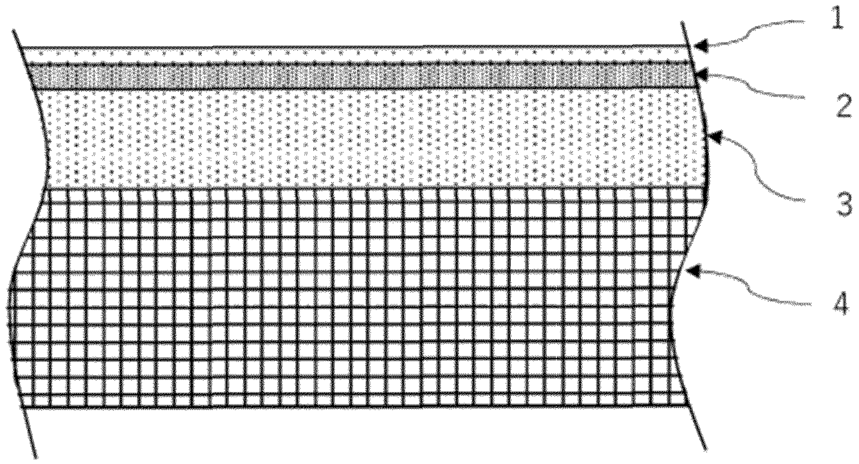

FIG. 2

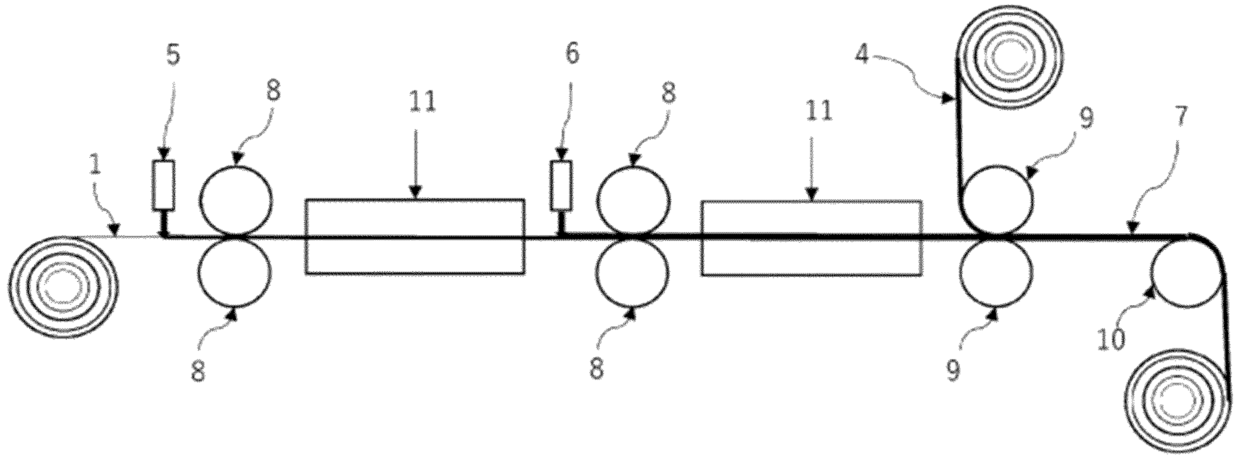

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3142102 B
- JP 2003119314 A
- JP 2004346094 A
- JP 4177318 B
- JP 2009185260 A
- JP 2013108196 A
- JP 2016008234 A
- JP 2014105250 A


### Non-patent literature cited in the description


- *Polymer Reviews,* vol. 9, 9-20